(19)

Europäisches
Patentamt
European
Patent Office
Office européen
des brevets

(11) **EP 1 903 737 B1**

(12) **EUROPEAN PATENT SPECIFICATION**

(45) Date of publication and mention
of the grant of the patent:
**17.11.2010 Bulletin 2010/46**

(51) Int Cl.:
*H04L 27/36* (2006.01)     *H03F 1/32* (2006.01)
*H04B 1/04* (2006.01)

(21) Application number: **06254656.9**

(22) Date of filing: **07.09.2006**

(54) **Modulation scheme adaptation in single carrier wireless communication systems**

Anpassung des Modulierungsschemas in Einträger-Funkkommunikationssystemen

Adaptation de schéma de modulation dans les systèmes de communication sans-fil à une porteuse

(84) Designated Contracting States:
**DE FR GB**

(43) Date of publication of application:
**26.03.2008 Bulletin 2008/13**

(73) Proprietor: **Fujitsu Ltd.**
**Kawasaki-shi, Kanagawa 211-8588 (JP)**

(72) Inventors:
• **Abedi, Saied**
**Reading, Berkshire RG1 4LY (GB)**

• **Awad, Yassin Aden**
**Southall Middlesex UB1 3JY (GB)**

(74) Representative: **Hitching, Peter Matthew et al**
**Haseltine Lake LLP**
**Lincoln House, 5th Floor**
**300 High Holborn**
**London**
**WC1V 7JH (GB)**

(56) References cited:
**US-A1- 2002 193 078     US-B1- 6 748 021**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to modulation scheme adaptation in single carrier frequency-division wireless communication systems.

Single-carrier frequency-division multiple-access (SC-FDMA) has recently been selected as a preferred method of transmission in the uplink (from a user equipment (UE) to a base station (node-B)) for the long term evolution (LTE) of the Universal Mobile Telecommunications System (UMTS) Terrestrial Radio Access Network (UTRAN). SC-FDMA with cyclic prefix is capable of achieving uplink inter-user orthogonality and efficient frequency-domain equalisation at the receiver side. Further information on SC-FDMA can be found, for example, in 3GPP TR 25,814 v.1.2.2. (2006-3), $3^{rd}$ Generation Partnership Project; Technical Specification Group Radio Access Network; Physical Layer Aspects for Evolved UTRA, section 9.1.

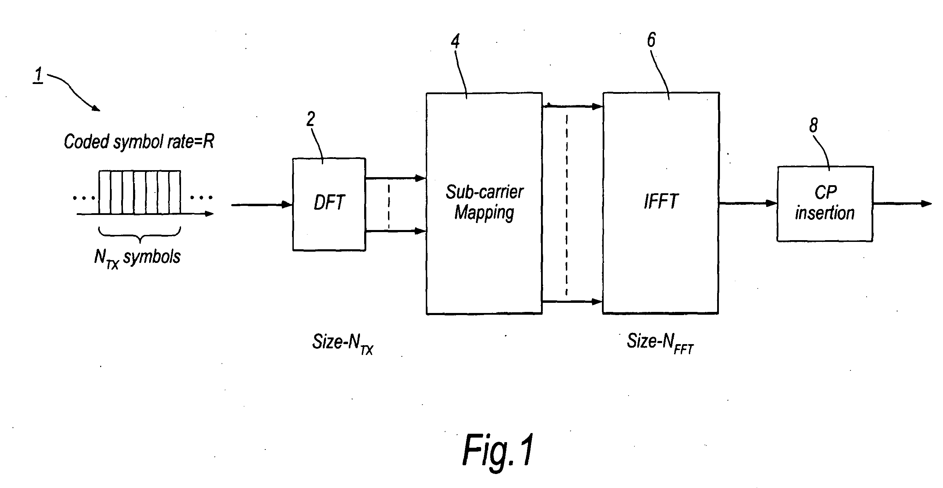

Figure 1 of the accompanying drawings shows parts of a transmitter 1 adapted for use in a SC-FDMA wireless communication system. The transmitter 1 comprises a discrete Fourier transform (DFT) unit 2, a sub-carrier mapping unit 4, an inverse fast Fourier transform (IFFT) unit 6 and a cyclic prefix (CP) insertion unit 8.

The DFT unit 2 receives $N_{TX}$ symbols which have been subject to coding at a rate R and modulation in accordance with a particular modulation scheme, for example QPSK or 16QAM. The DFT unit 2 generates DFT output signals based on the $N_{TX}$ symbols and supplies these DFT output signals to the sub-carrier mapping unit 2. The sub-carrier mapping unit 2 determines which part of the spectrum is used for transmission by inserting a suitable number of zeros in sub-carrier positions that will not be used. The mapping carried out by the sub-carrier mapping unit 4 may be a localised mapping, i.e. a mapping in which the DFT output signals are mapped to consecutive sub-carriers. Alternatively, the sub-carrier mapping unit 4 may apply a distributed mapping, in which the DFT output signals are mapped in a distributed manner to different non-consecutive sub-carriers. The sub-carrier mapping unit 4 outputs mapped DFT signals corresponding respectively to the different sub-carriers to the IFFT unit 6. The IFFT unit 6 performs IFFT processing of size $N_{FFT}$ on the mapped DFT signals to produce a series of time domain symbols. These time domain symbols are supplied to the CP insertion unit 8 which inserts a cyclic prefix (CP) at the beginning of each symbol. This cyclic prefix is inserted to prevent intersymbol interference whilst preserving the orthogonality of the carriers.

The elements shown in Figure 1 operate in the digital domain. After the insertion of the cyclic prefix, the time domain symbols including the cyclic prefixes are then converted into an analog signal by a digital-to-analog converter (DAC) (not shown) and are then up-converted into radio-frequency (RF) signals by an RF block (not shown). The RF signal is transmitted by the transmitter to a receiver (e.g. a node B) via a radio channel.

Although SC systems have the advantage of low peak-to-average power ratio (PAPR), when used in the uplink (i.e. when the transmitter is part of a UE) a major problem is limited available amplifier back-off (i.e. low efficient clipping level).

In SC systems, many different methods of PAPR reduction have already been proposed. These methods include the use of spectrum shaping filters, signal clipping and enhanced modulation schemes such as π/4-shifted QPSK and π/2-shifted BPSK. Further information regarding such enhanced modulation schemes can be found, for example, 3GPP TSG RAN WG1 meeting #43, R1-051543,: "Circular 16 QAM for UL SC PAPR reduction", Fujitsu, NTT DoCoMo, Seoul, Korea, $7^{th}$ -$11^{th}$ November 2005.

The major problem with using a single enhanced modulation scheme is that there will usually be a trade-off between the pre-antenna distortion (for example due to PAPR) and post-antenna distortion (due to radio channel fading and additive white Gaussian noise (AWGN)). For example, an enhanced circular QAM modulation scheme may achieve a better PAPR level than a rectangular QAM modulation but its performance in a deep fade may be poor compared to that of the rectangular QAM scheme.

US6748021 discloses a cellular radio communication system for transmitting data over a plurality of transmission links comprising:a generator for producing a modulated signal by applying a modulation scheme to data to be transmitted across a transmission link; an amplifier having a non-linear mode of amplification and a linear mode of amplification; and a processor for determining the quality of said transmission link, wherein a constant envelope modulation scheme and said non-linear mode of amplification is used for transmitting said data when said quality determination falls below a threshold, and a second modulation scheme and said linear mode of amplification is used for transmitting said data when said quality determination exceeds said threshold.

US2002193078 discloses a communication system having remote power amplifier linearization, said system comprising:at least one user radio having a power amplifier linearizer that applies a transfer function to a modulated data stream, is coupled to a power amplifier, and is configured to transmit a communication signal generated by said power amplifier of said user radio; and a hub radio configured to receive said communication signal transmitted from said at least one user radio, to generate a signal quality measurement for said communication signal, to formulate commands in response to said signal quality measurement for said communication signal, and to transmit said commands; wherein said one user radio is further configured to adjust said transfer function of said power amplifier linearizer of said user radio in response to one of said commands so that said user radio power amplifier becomes remotely linearized.

The invention is disclosed according to the independent claims.

The subject-matter disclosed below in the description and going beyond the scope of the claims has to be considered as examples and not embodiments even if the words like "embodiment", "invention", "spirit", or the like are used in said description.

According to a first aspect of the present invention there is provided a method of adapting a modulation scheme applied by a transmitter to a transmission signal in a single-carrier frequency-division wireless communication system, the method comprising: receiving at the transmitter N symbols to be transmitted using said transmission signal, where N is a natural number greater than or equal to 1, and, for each of a plurality of available modulation schemes, determining a constellation point of the or each said symbol if the modulation scheme concerned is applied to transmit the symbol; for each of said plurality of available modulation schemes, producing, based on the determined constellation point(s), at least one measure of an expected transmission performance if the available modulation scheme is applied to the transmission signal when transmitting said N symbols; selecting one of the available modulation schemes based on the or at least one said measure; and transmitting the N symbols using said transmission signal whilst applying thereto the selected modulation scheme.

Such a method can provide worthwhile improvements in transmission performance without imposing a significant processing burden on the transmitter. This makes the invention readily usable in the case in which the transmitter is a UE and/or is battery powered.

Preferably, at least one determined constellation point is a distorted constellation point reflecting an expected distortion of the transmission signal. For example, the transmitter itself may distort the transmission signal prior to wireless transmission, e.g. in an amplifier. In that case, an amplifier behaviour model may be used to estimate how the amplifier will distort the transmission signal and hence obtain distorted constellation points.

In one embodiment, determining the distorted constellation point(s) for each said available modulation scheme comprises: generating a potential transmission signal for the modulation scheme concerned; processing the potential transmission signal to apply thereto an expected distortion; and determining the distorted constellation point(s) based on the processed potential transmission signal having said distortion.

The transmitter may generate the transmission signal by using N-point DFT processing and M-point IFFT processing, where M is different from N, so that the transmission signal based on the received N symbols has M constellation points. This can be done to reduce the effective power of the transmission signal. In this case, producing the measures of expected transmission performance is complicated by the fact that the number of final constellation points is reduced and the amplifier behaviour model must be applied to the final constellation points, resulting in the number of distorted constellation points being different from the number of ideal (non-distorted) constellation points. In one embodiment of the present invention, determining the distorted constellation point(s) for each said available modulation scheme may comprise: generating a potential transmission signal for the modulation scheme concerned having M constellation points; processing the potential transmission signal having said M constellation points to apply thereto an expected distortion; and, in the transmitter, applying to the processed potential transmission signal having M distorted constellation points processing conforming substantially to processing carried out in a receiver of the wireless communication system on the received transmission signal to generate a distorted signal having N distorted constellation points.

The processing of the potential transmission signal to apply thereto an expected distortion may comprise comparing an amplitude of the potential transmission signal with a predetermined value and, if the amplitude exceeds the predetermined value, limiting the amplitude of the potential transmission signal to said predetermined value and adjusting a phase of the potential transmission signal in dependence upon the original unlimited amplitude. Such processing is simple to perform but provides a useful guide to actual distortion in the transmitter.

Preferably, at least one determined constellation point is an ideal constellation point assuming that there is no distortion of the transmission signal. This can be useful for taking into account the effect of post-antenna distortion and is, of course, simple to produce.

In a preferred embodiment, the or one said measure for a particular available modulation scheme is a distance measure that is dependent on a distance between the determined constellation point of the or each said symbol in the particular modulation scheme concerned and at least one other constellation point available in the particular modulation scheme concerned. Such a distance measure is relatively easy to produce without a large processing burden. Also, for ideal constellation points, the distances between different constellation points can be calculated in advance and held in a memory, reducing the processing burden in operation.

Such a distance measure is preferably dependent on the respective distances between said determined constellation point and a plurality of other available constellation points neighbouring the determined constellation point. For example, the nearest 4 constellation points to the selected constellation point may be considered. This gives a reasonable guide to performance without requiring all the available constellation points to be considered. Alternatively, such a distance measure may be dependent on the respective distances between said determined constellation point and all other available constellation points in the particular modulation scheme concerned.

Preferably, the method involves determining for the or each said symbol an ideal constellation point and a distorted constellation point, and producing first and second such distance measures for a particular available modulation scheme, the first distance measure being dependent on a distance between the determined ideal constellation point of the or each said symbol in the particular modulation scheme concerned and at least one other constellation point available in the particular modulation scheme concerned, and the second distance measure being dependent on a distance between the determined distorted constellation point of the or each said symbol in the particular modulation scheme concerned and at least one other available constellation point.

By producing two different measures in this way, aspects of pre-antenna distortion and post-antenna distortion can be captured effectively.

Instead of producing distance measures, it is also possible to produce one or more probability measures based on the constellation points. Such a probability measure would measure the probability that the distance(s) between a determined constellation point and at least one available constellation point was below (or above) some threshold. In the selecting step the selection would be based on which modulation scheme would have the best probability of having a distance below the threshold.

The method may comprise judging if it is expected that the transmitter will distort the transmission signal significantly prior to wireless transmission and, if not, modifying the basis on which the available modulation scheme is selected in the selecting step. For example, if no distortion is expected, different measures may be used to select the modulation scheme from the measures used when distortion is expected. Alternatively, if the judgement is that no significant distortion by the transmitter is expected, the modulation scheme may be selected in the selecting step without taking into account the second distance measure mentioned above.

The judgement may involve generating a potential transmission signal for at least one said available modulation scheme, and estimating an expected distortion of that potential transmission signal in the transmitter.

The method may also comprise judging if it is expected that fading loss in a wireless channel from the transmitter to a receiver of said wireless communication system will be significant and, if so, modifying the basis on which the modulation scheme is selected in the selecting step. For example, if no significant fading loss is expected, different measures may be used to select the modulation scheme from the measures used when significant fading loss is expected. The fading loss may be estimated in the receiver. In this case the receiver may supply to the transmitter information relating to the estimated fading loss and the transmitter may modify the basis on which the modulation scheme is selected in the selecting step in dependence upon the supplied information.

In another embodiment, at least two such measures of expected transmission performance are produced, each based on the determined constellation point(s) but calculated in a different way from each other said measure, and the method further comprises switching between a first selection mode, in which the selection of the modulation scheme is based on a first one, or a first combination, of said measures, and a second selection mode in which the selection of the modulation scheme is based on a second one of the measures, different from said first measure, or on a second combination of the measures different from said first combination. The measures may be distance measures or probability measures or any other suitable measures, or any combination of these. The switching may be done by an operator of the transmitter but is preferably carried out dynamically in use of the transmitter, for example based on fading loss information or on pre-antenna distortion information.

Although the measures are based on determined constellation points they may also be influenced by other factors, too. For example, at least one said measure for each said available modulation scheme may also be dependent on an expected power loss in the transmitter if the available modulation scheme concerned is applied to the transmission signal when transmitting said N symbols. Such an expected power loss in a measure of pre-antenna distortion expected in the transmitter.

According to a second aspect of the present invention there is provided a transmitter for use in a single-carrier frequency-division wireless communication system, the transmitter comprising: receiving means for receiving N symbols to be transmitted using a transmission signal, where N is a natural number greater than or equal to 1; constellation point determining means for determining, for each of a plurality of available modulation schemes, a constellation point of the or each said symbol if the modulation scheme concerned is applied to transmit the symbol; measure producing means for producing, for each of said plurality of available modulation schemes, at least one measure of an expected transmission performance if the available modulation scheme is applied to the transmission signal when transmitting said N symbols, the or each said measure being based on the determined constellation point(s); selecting means for selecting one of the available modulation schemes based on the or at least one said measure; and transmitting means for transmitting the N symbols using said transmission signal whilst applying thereto the selected modulation scheme.

According to a third aspect of the present invention there is provided user equipment, for use in a single-carrier frequency-division wireless communication system, comprising a transmitter embodying the aforesaid second aspect of the present invention, said transmission signal being an uplink signal transmitted by the user equipment to a base station of the system.

According to a fourth aspect of the present invention there is provided a single-carrier frequency-division wireless communication system comprising a transmitter embodying the aforesaid second aspect of the present invention and at least one receiver adapted to receive the transmission signal. The transmitter may be a UE and the receiver may be a base station (node B), or vice versa.

A method embodying the present invention may be implemented by a processor such as a digital signal processor (DSP) operating according to a program. According to a fifth aspect of the present invention there is provided an operating program which, when executed by a processor in a transmitter of a single-carrier frequency-division wireless communication system, causes the transmitter to: receive N symbols to be transmitted using a transmission signal, where N is a natural number greater than or equal to 1, and, for each of a plurality of available modulation schemes, to determine a constellation point of the or each said symbol if the modulation scheme concerned is applied to transmit the symbol; produce, for each of said plurality of available modulation schemes, based on the determined constellation point(s), at least one measure of an expected transmission performance if the available modulation scheme is applied to the transmission signal when transmitting said N symbols; select one of the available modulation schemes based on the or at least one said measure; and transmit the N symbols using said transmission signal whilst applying thereto the selected modulation scheme. The program may be provided by itself or on a carrier medium. The carrier medium may be a transmission medium (signal) or a recording medium (e.g. disk).

Of course, the invention may be implemented in hardware instead of software, or in a combination of the two.

Reference will now be made, by way of example, to the accompanying drawings, in which:

Figure 1, discussed hereinbefore, shows parts of a transmitter for use in a SC system;
Figures 2A and 2B present I-Q diagrams showing examples of available modulation schemes in a transmitter embodying the present invention;
Figure 3 is a flowchart for use in explaining operation of a transmitter embodying the present intention;
Figures 4 and 5 are I-Q diagrams for use in explaining how distorted constellation points are determined in a first embodiment of the present invention;
Figure 6 is a schematic view for use in explaining how a distance measure is produced in the first embodiment of the present invention;
Figure 7 is a block diagram of an SC system embodying the present invention, for use in explaining signalling in the system;
Figure 8 is a block diagram of another SC system embodying the present invention;
Figures 9 to 11 are graphs presenting a variation of a bit error rate (BER) with a ratio of bit energy to noise power spectral density (Eb/No) of (a) a transmitter employing a rectangular 16 QAM modulation scheme exclusively, (b) a transmitter employing a circular 16 QAM modulation scheme exclusively, and (c) a transmitter embodying the present invention, under different pre-antenna and post-antenna distortion conditions;
Figure 12A is a schematic view of a transmitter without DFT-IFFT mismatch;
Figure 12B is a schematic view of a transmitter with DFT-IFFT mismatch;
Figure 13 is a block diagram of parts of a transmitter having DFT-IFFT mismatch according to a second embodiment of the present invention;
Figure 14 is a block diagram showing, in more detail than Figure 13, parts of the transmitter in the second embodiment;
Figure 15 shows a proposed frame structure for use in the second embodiment;
Figures 16 to 20 are graphs for comparing simulated performance of transmitters using a single modulation scheme with a transmitter according to the second embodiment at different amplifier clipping levels;
Figures 21 and 22 are graphs for illustrating an assumed variation of a fading gain over a series of frames according to a linear scale (Figure 21) and a logarithmic scale (Figure 22);
Figures 23 to 34 are graphs for comparing simulated performance of transmitters using a single QAM modulation scheme with a transmitter according to the second embodiment at different coding rates and clipping levels under fading conditions;
Figure 35 is a histogram for use in explaining how the selection of modulation scheme varies with amplifier clipping level in the second embodiment.

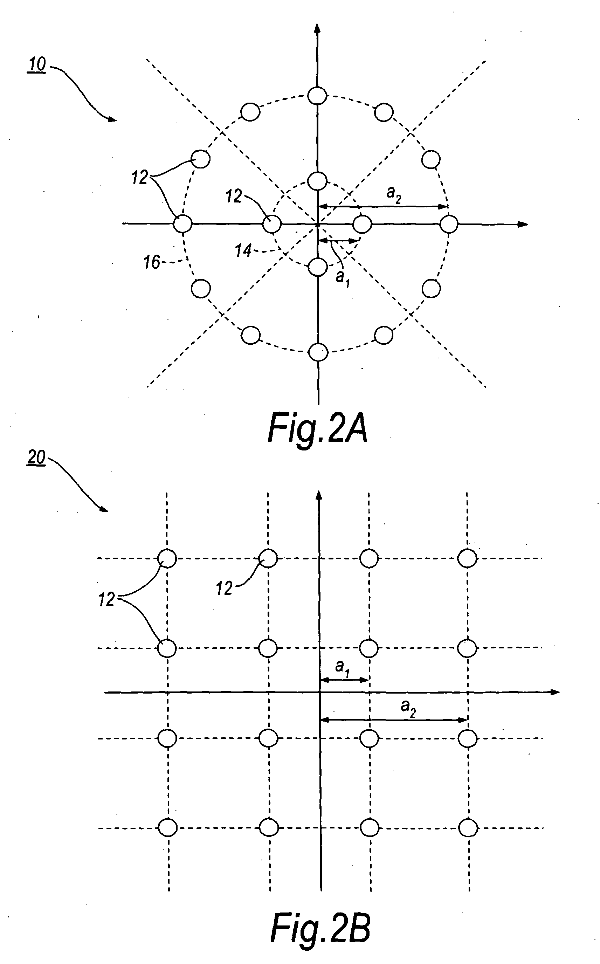

A transmitter for use in a SC system embodying the present invention is capable of using any one of a plurality of available modulation schemes. For example, the available modulation schemes may be as shown in Figures 2A and 2B.

Figure 2A shows a circular 16 QAM modulation scheme 10 having 16 constellation points 12. Four constellation points are arranged in an inner ring 14 and 12 constellation points are arranged in an outer ring 16. A radius of the inner ring is a1 and a radius of the outer ring is a2. In this example, a1/a2 = 1/1.4.

Figure 2B shows a rectangular 16 QAM scheme 20. In this case, the 16 constellation points 12 are arranged in a grid-like configuration. Each of the four innermost constellation points is arranged at a distance a1 from the origin in the I-direction and the Q-direction, and each of the 12 outermost constellation points 12 is arranged at a distance $a_2$ from the origin in the I-direction and the Q-direction. Again, in this example, a1/a2 = 1/1.4.

A transmitter embodying the present invention can select a different one of the available modulation schemes for each new frame of data. Here, a frame of data consists of N data symbols, where N is a natural number greater than or equal to 1. Preferably N is chosen so that fading remains substantially constant over the time period of transmission of the frame. However, N is not particularly limited. For example N may be 16 or may be a much larger number such as 1800. As indicated later, the smaller the value of N, the greater the signalling required in the SC system, so in general N should be set as high as possible, consistent with the fading being substantially constant over the frame period.

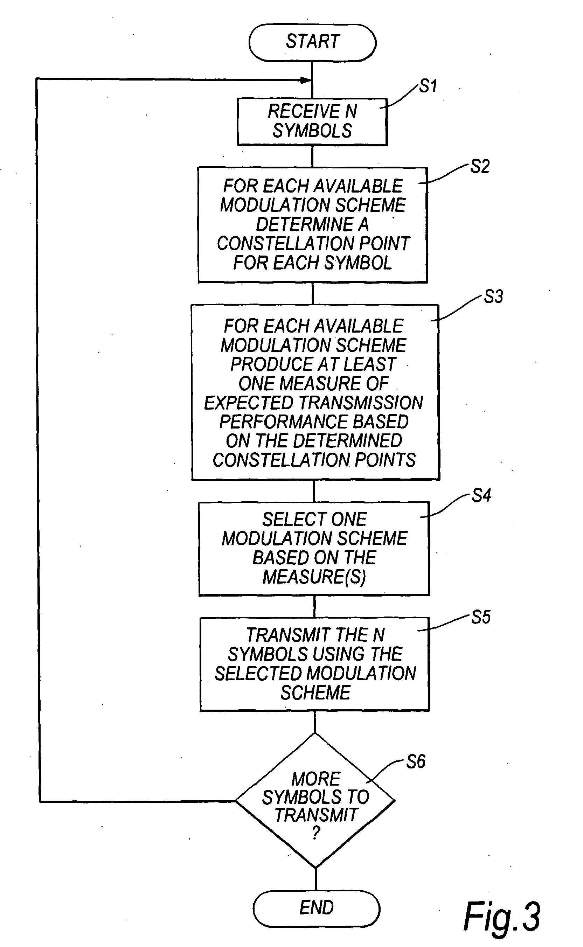

The way in which one of the available modulation schemes is chosen for each data frame will now be explained with reference to the flowchart of Figure 3.

The flowchart of Figure 3 operates on a frame-by-frame basis. In a first step S1, processing of a new frame begins and N data symbols are received. In step S2, for each available modulation scheme, a constellation point for each of the symbols is determined. For example, for the circular 16 QAM scheme 10 of Figure 2A one of the constellation points 12 is selected. Similarly, for the rectangular 16 QAM scheme 20 shown in Figure 2B one of the constellation points 12 is selected for each symbol. The manner in which a constellation point is selected for a data symbol is well-known in the art, and is not described further here. As explained later in more detail, the determined constellation point may be an ideal constellation point taking no account of pre-antenna distortion such as amplifier clipping. Alternatively, the determined constellation point may be a distorted constellation point taking into account such pre-antenna distortion. Preferably, in step S2 both an ideal constellation point and a distorted constellation point are determined for each symbol.

Then, in step S3, at least one measure of expected transmission performance is produced for each available modulation scheme. The measures are produced based on the determined constellation points in step S2. For example, a first measure may be produced based on the ideal constellation points and a second measure may be produced based on the distorted constellation points.

In step S4, one of the available modulation schemes is selected based on the measures produced in step S3. As described later, the way in which the selection is carried out based on the measures may be changed to take account of expected transmission characteristics, for example whether or not significant fading loss variation is expected.

In step S5 the frame of data made up of the N symbols is transmitted using the selected modulation scheme.

In step S6 it is determined whether or not there are more data symbols to be transmitted. If so, processing returns to step S1 for the next frame. Otherwise processing ends.

A first embodiment of the invention will now be described in more detail with reference to equations (1) to (22) below.

As previously described with reference to Figure 3, for each of M available modulation schemes a constellation point $C_{mn}$ is determined for each of the N data symbols of a frame of data. In this case, the determined constellation point $C_{mn}$ is an ideal constellation point, not taking account of any pre-antenna distortion in the transmitter. Thus, for each of the M available modulation schemes a set of N constellation points is determined

$$\mathbf{C}_m = \left[ C_{m,1}, C_{m,2}, \cdots, C_{m,N} \right]^T \qquad (1)$$

where

$$C_{mn} \in \mathbf{Q}_m \qquad (2)$$

and

$$\mathbf{Q}_m = \left[ C_{m,1}, C_{m,2}, \cdots, C_{m,P} \right]^T, m = 1, 2, \cdots, M \qquad (3)$$

where P is the total number of available constellation points in the scheme (e.g. P = 16 in the example of Figures 2A and 2B).

In the time domain, the nth transmitted symbol can be represented as

$$s_n(t) = C_n e^{j(2\pi ft)}, \qquad nT < t < (n+1)T \qquad (4)$$

where T is the symbol period.

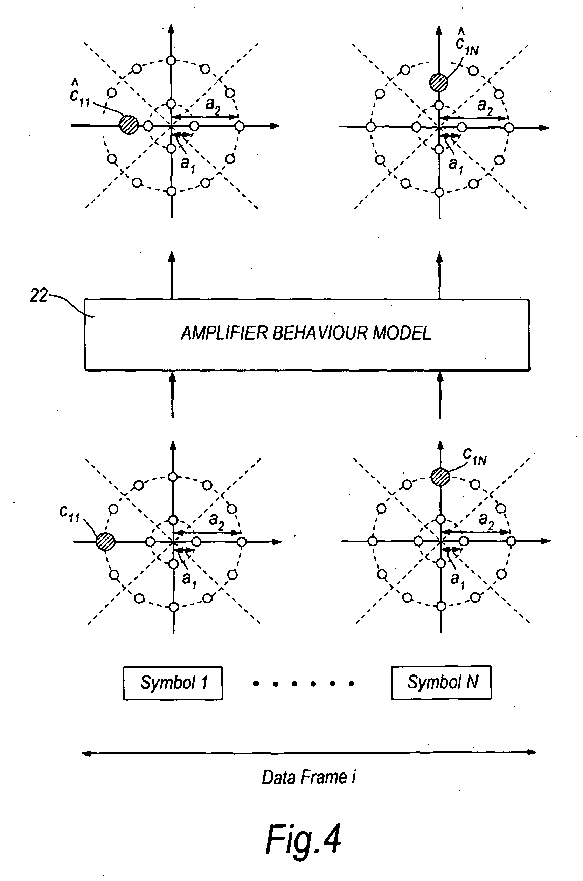

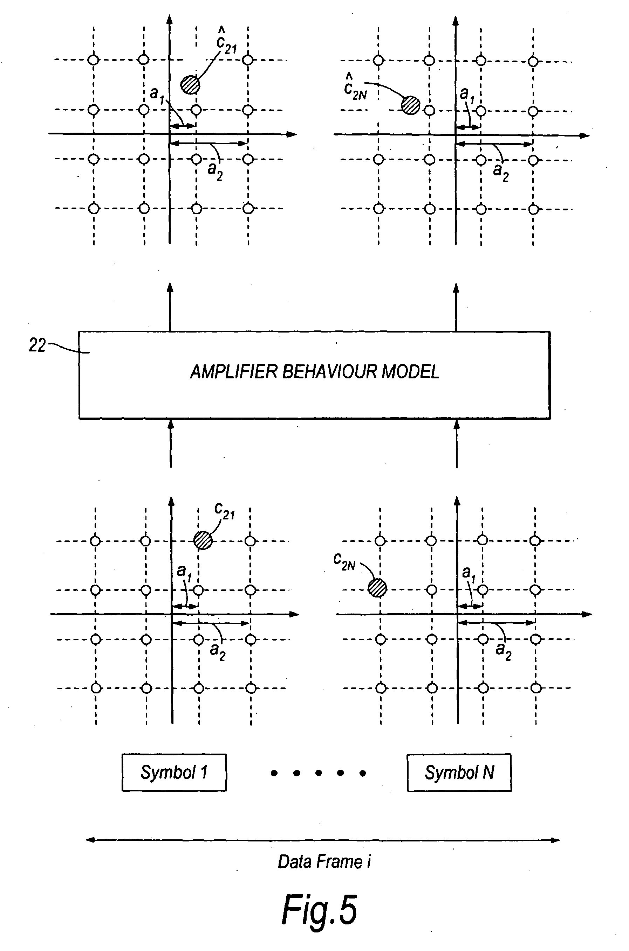

In this embodiment, it is assumed that the amplifier has a limited back-off so that for some data frames some of the constellation points will suffer distortion due to high PAPR and/or limited amplifier back-off. To take account of this pre-antenna distortion, the present embodiment also applies an amplifier behaviour model to determine a distorted constellation point for each symbol, again on a per-modulation-scheme basis. A data frame i is made up of N symbols. For each symbol, an ideal constellation point is determined. Referring to Figure 4, for the first available modulation scheme of Figure 2A (the circular 16 QAM scheme) a set $C_1$ of ideal constellation points ($C_{11}$ to $C_{1N}$) is determined for the symbols, including an ideal constellation point $C_{11}$ for symbol 1 and an ideal constellation point $C_{1N}$ for symbol N. Also, for all the symbols, a set $\hat{C}_1$ of distorted constellation points $\hat{c}_{11}$ to $\hat{c}_{1N}$ is determined, including a distorted constellation point $\hat{c}_{11}$ for symbol 1 and a distorted constellation point $\hat{c}_{1N}$ for symbol N. Similarly, referring to Figure 5, for the second available modulation scheme 20 of Figure 2B (the rectangular 16 QAM scheme) a set of $C_2$ ideal constellation points $c_{21}$ to $c_{2N}$ is determined and a set $\hat{C}_2$ of distorted constellation points $\hat{c}_{21}$ to $\hat{c}_{2N}$ is determined.

To determine the distorted constellation points an amplifier behaviour model 22 is used. In this embodiment, the amplifier behaviour model 22 assumes that amplitude clipping occurs in the amplifier which limits a peak envelope of an amplifier input signal to a predetermined value. If the input signal is below the predetermined value in amplitude the input signal is passed undistorted through the amplifier. Thus, if the amplifier input signal is x and the amplifier output signal is y, and the predetermined value to A,

$$y = \begin{cases} x, & |x| < A \\ Ae^{j\phi(x)}, & |x| \geq A \end{cases} \qquad (5)$$

where $\phi(x)$ is the phase of $x$.

The set of distorted constellation points for each available modulation scheme is then determined based on the amplifier output signal y modelled by equation (5). To obtain x a potential transmission signal is generated for the available modulation scheme, i.e. a DFT-IFFT operation is carried out for the available candidate modulation scheme. Then, the amplifier behaviour model is applied to obtain $y$ for each potential transmittal signal x.

In the present embodiment, the transmitter can operate either in a first selection mode or in a second selection mode. The first selection mode is intended to be used when both pre-antenna distortion and post-antenna distortion are significant. The second selection mode is intended to be used when only pre-antenna distortion is significant. As explained later, the selection mode may be fixed in advance or it may be switched dynamically in use of the transmitter.

The transmitter produces four different sub-metrics in this embodiment. In the first selection mode the modulation scheme is selected based on a combination of a first pair of the sub-metrics and in the second selection mode the modulation scheme is selected based on a combination of a second pair of the sub-metrics.

Each sub-metric is produced based on either the set of ideal or distorted constellation points.

A first sub-metric $a_m$ is produced for each modulation scheme based on the ideal constellation points and for the modulation scheme concerned. This first sub-metric is a measure of the overall distance between the set of ideal constellation points selected for the frame and all the available constellation points in the scheme concerned. Thus,

$$a_m = \sum_{n=1}^{N} \sum_{p=1}^{P} |c_{mn} - c_{mp}|^2 \qquad (6)$$

where P is the total number of constellation points in the modulation scheme under consideration (e.g. 16 in the examples of Figures 2A and 2B). Clearly, the higher this overall distance the better it is expected that the transmission performance in the radio fading channel will be. Thus, this first sub-metric takes account of post-antenna distortion.

Although, in this embodiment, the first sub-metric takes account of all available constellation points when calculating the overall distance, this is not essential. For example, it would be possible to take account only of the distances between a selected ideal constellation point and a cluster of neighbouring constellation points, for example the nearest four constellation points.

A second sub-metric $b_m$ is produced for each modulation scheme based on the distorted constellation points $\hat{c}$ for the modulation scheme concerned. The second metric represents the overall distance between the set of distorted constellation points selected for the frame and all the available constellation points (except for the selected (ideal) constellation points, see below) for the modulation scheme concerned. The set of distorted constellation points is:

$$\hat{\mathbf{C}}_m = [\hat{c}_{m1}, \cdots, \hat{c}_{mN}] \tag{7}$$

The second sub-metric can then be determined as

$$b_m = \sum_{n=1}^{N} \sum_{p=1}^{P} \left| \hat{c}_{mn} - c_{mp} \right|^2 \tag{8}$$
$$c_{mn} \neq c_{mp}$$

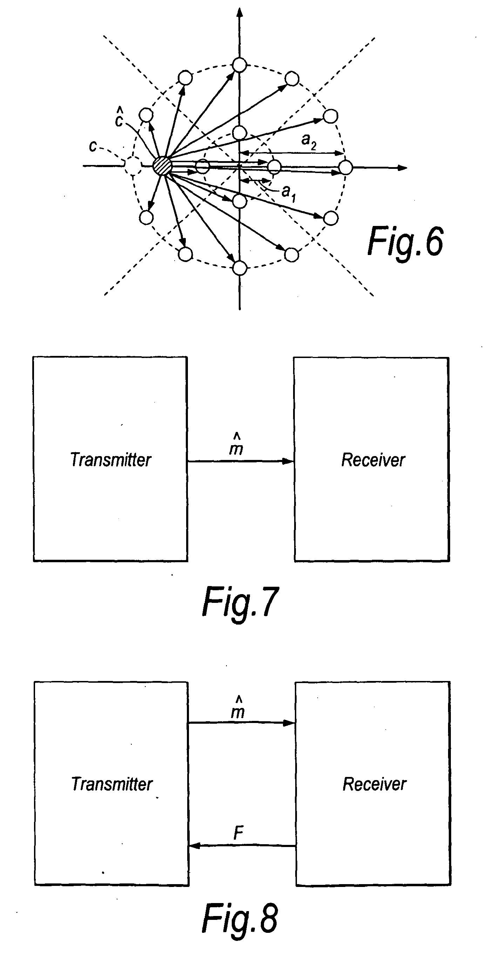

In this case, the higher the overall distance the lower the impact of pre-antenna distortion (PAPR and amplifier clipping) and the better the expected performance in the radio fading channel. Figure 6 is an I-Q graph illustrating how the second sub-metric $b_M$ is calculated for a particular selected distorted constellation point $\hat{c}$.

As is clear from equation (8), the calculation of the second sub-metric $b_m$ ignores the distance of each distorted constellation point from its corresponding selected (ideal) constellation point c (shown in a dotted outline in Figure 6). This is because the higher the distance of the distorted constellation point $\hat{c}$ from the ideal selected constellation point c the worse the performance is expected to be, whereas for other constellation points the higher the distance of the distorted constellation point the better the performance is expected to be.

Incidentally, as in the case of the first sub-metric $a_m$, it is not necessary in calculating the second sub-metric $b_m$ to take account of the distance of a selected distorted constellation point from all other available constellation points. For example, it would be possible simply to consider the distance of the selected distorted constellation point from a set of neighbouring available constellation points, for example the nearest four constellation points.

A third sub-metric $y_m$ is also produced in this embodiment. This third sub-metric is similar to the second sub-metric $b_m$ but is subject to an additional normalisation process:

$$y_m = \sum_{n=1}^{N} \sum_{p=1}^{P} \frac{\left| \hat{c}_{mn} - c_{mp} \right|^2}{\left| c_{mp} \right|^2} \tag{9}$$
$$c_{mn} \neq c_{mp}$$

Incidentally, for the purposes of calculating the sub-metrics it is not necessary to represent the constellation points to a high accuracy. For example, the I-Q space may be considered to be a grid with LxL squares, where L is 10, for example. It would then be sufficient to represent any given constellation point by its grid position, i.e. the square in which it is located. This can reduce the storage capacity required and the processing burden.

Each of the three sub-metrics $a_m$, $b_m$ and $y_m$ is subject to a normalisation. The normalisation factor $f_m$ is the same for all three sub-metrics but is dependent on the particular available modulation scheme

$$f_m = \sum_{p=1}^{P} \left( \left| c_{mp} \right|^2 \right) \tag{10}$$

First, second and third normalised sub-metrics $\alpha_m$, $\beta_m$ and $\gamma_m$ are then calculated as

$$\alpha_m = \frac{a_m}{f_m} \qquad (11)$$

and

$$\beta_m = \frac{b_m}{f_m} \qquad (12)$$

and

$$\gamma_m = \frac{y_m}{f_m} \qquad (13)$$

Finally, a fourth sub-metric $\lambda_m$ is calculated in dependence on the second normalised sub-metric $\beta_m$ of equation (12). This fourth sub-metric $\lambda_m$ is intended to take into account pre-antenna distortion. A metric related to pre-antenna distortion is calculated for each available modulation scheme by considering the total lost power due to PAPR and inefficiency of the amplifier. For each available modulation scheme m, the time-domain samples of the potential transmission signal can be represented by

$$\mathbf{S}_m = \left[ s_{m0}, s_{m1}, \cdots, s_{m,K-1} \right]^T \qquad (14)$$

where K represents the number of samples per symbol. For n-th symbol the total lost power is calculated as

$$\rho_{mn} = \sum_{k=0}^{K-1} \eta_{mk} \qquad (15)$$

where

$$\eta_k = \begin{cases} |s_k|^2 - |A|^2, & when \quad |s_k|^2 > |A|^2 \\ 0 & Otherwise \end{cases} \qquad (16)$$

Here A is the same as in equation (5) above, i.e. the amplitude limit at which the amplifier begins to clip the input signal x.

The total lost power $\rho_{mn}$ per symbol, calculated using equation (15), is then used to calculate a measure of total lost power for the frame as a whole:

$$p_m = \sum_{n=1}^{N} \rho_{mn} \qquad (17)$$

Assuming that

$$\chi_m = \frac{p_m}{(p_m)_{\max}}, \qquad m = 1 \cdots M \qquad\qquad (18)$$

The fourth sub-metric Am is then calculated:

$$\lambda_m = \frac{\beta_m \cdot \overline{\chi}_m}{1 + \chi_m} \qquad\qquad (19)$$

where $\chi_m$ is the mean of $\chi_m$.

The present embodiment is intended to be capable of selecting the modulation scheme under different conditions.

A first condition is when both pre-antenna distortion (e.g. due to PAPR) and post-antenna distortion (e.g. due to fast-varying fading) are present. Under this first condition it is found to be effective to use a first measure, formed by adding together the first normalised sub-metric $\alpha_m$ and the second normalised sub-metric $\beta_m$, to make the selection. This corresponds to the first selection mode mentioned above. The selected modulation scheme $\hat{m}$ in this case is the one for which $\alpha_m + \beta_m$ is maximised:

$$\hat{m} = \max_m \left( \alpha_m + \beta_m \right) \qquad\qquad (20)$$

Under a second condition in which only pre-antenna distortion is present and post-antenna distortion is not significant (i.e. the channel is equivalent to an AWGN channel with insignificant fading, i.e. low variance of fading loss), a second measure is preferably used to make the selection. This second measure is produced by adding together the third normalised sub-metric $\gamma_m$ and the fourth normalised sub-metric $\lambda_m$. This corresponds to the second selection mode mentioned above. The selected modulation scheme $\hat{m}$ in this case is the one which maximises $\gamma_m + \lambda_m$:

$$\hat{m} = \max_m \left( \gamma_m + \lambda_m \right) \qquad\qquad (21)$$

Once the transmitter has selected the modulation scheme $\hat{m}$ according to equation (20) or (21), in this embodiment the transmitter signals to the receiver (i.e. in this case the base station) identification information identifying the selected modulation scheme $\hat{m}$. For example, with only two available modulation schemes as in this example, it is sufficient for the signalling to use a single bit which may be zero for one modulation scheme and one for the other modulation scheme. This is illustrated schematically in Figure 7.

If the receiver is capable of estimating an expected fading loss for the next data frame to be transmitted by the transmitter, it is possible for the transmitter to modify the way in which it uses the different sub-metrics to arrive at the best modulation scheme. For example, the transmitter may switch selectively between using the first measure $\alpha_m + \beta_m$ as in equation (20) and the second measure $\gamma_m + \lambda_m$ of equation (21). This switching between the first and second selection modes may be made dynamically in dependence upon a fading loss measure F supplied by the receiver to the transmitter, as shown schematically in Figure 8. Assuming F is the fading loss measure supplied by the receiver the operation then becomes:

$$\begin{cases} \hat{m} = \max_{m} (\alpha_m + \beta_m) & F > 0 \\ \hat{m} = \max_{m} (\gamma_m + \lambda_m) & F \approx 0 \end{cases} \qquad (22)$$

Preferably, a new value of F is supplied for each frame.

Although in Figures 7 and 8 the transmitter supplies identification information to the receiver to identify the selected modulation scheme $\hat{m}$, it would alternatively be possible to arrange for the receiver to determine for itself which modulation scheme the transmitter had applied to the data frame by examining the received data and comparing it blindly with the available modulation schemes. This would avoid the need for signalling from the transmitter to the receiver but would of course increase the receiver complexity.

The performance of a transmitter according to the present embodiment (i.e. using the sub-metrics and final measures of equations (6) to (22) described above) was simulated and compared with the performance of a first comparable transmitter (a) using circular 16 QAM exclusively for all frames and a second comparable transmitter (b) using rectangular 16 QAM exclusively for all frames. In the simulations, the channel between the transmitter and the receiver was assumed to be a AWGN channel. It was also assumed that fading coefficients are generated through complex Gaussian distributions where amplitude and phase of the generated random variables represent the fading distortions. No coding was considered. The frame size was N = 16 symbols.

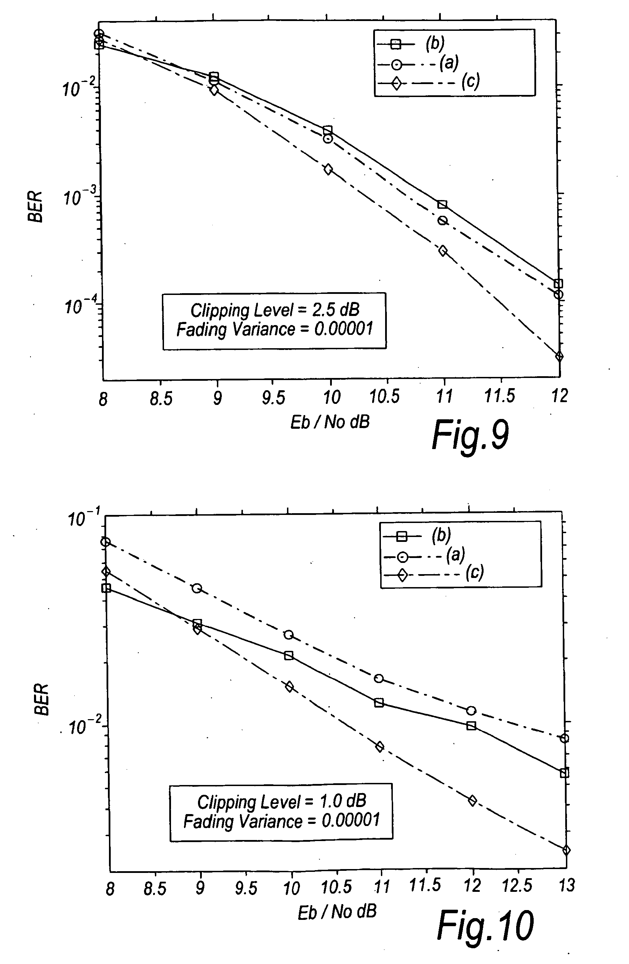

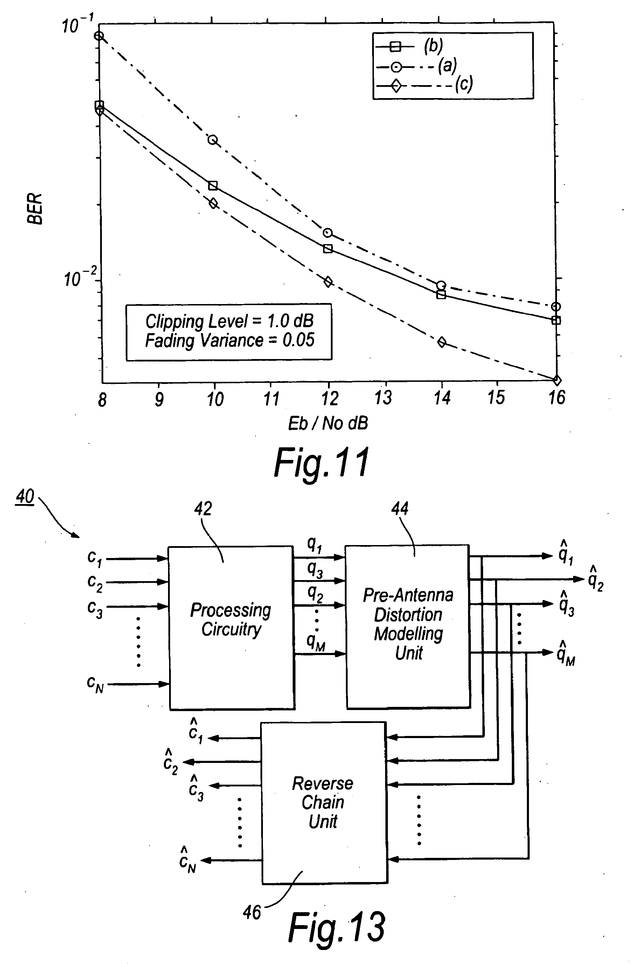

In Figures 9 to 11, a variation of the bit error rate (BER) with signal-to-noise ratio (ratio of bit energy to noise power spectral density Eb/No expressed in dB) is considered for the present embodiment (c) and the comparable transmitters (a) and (b) under different conditions. The conditions for Figure 9 are a clipping level of 2.5dB and a fading variance of 0.00001. For Figure 10 the conditions are a clipping level of 1.0dB and a fading variance of 0.00001. For Figure 11 the conditions are a clipping level of 1.0dB and a fading variance of 0.05. Thus, in the case of Figures 9 and 10 the fading variance is very small, i.e. there is negligible post-antenna distortion. In the case of Figure 9 the amplifier clipping level is relatively high, whereas in the case of Figures 10 and 11 the amplifier clipping level is relatively low. In other words, the amplifier in Figure 9 is better than the amplifier in Figures 10 and 11.

It can be seen that in Figure 9 the circular 16 QAM transmitter (a) is better than the rectangular 16 QAM transmitter (b). In Figure 10, on the other hand, the reverse is true and the rectangular 16 QAM transmitter (b) performs better than the circular 16 QAM transmitter (a). Except at the very highest signal-to-noise ratios, both transmitters (a) and (b) are outperformed by a transmitter embodying the present invention. Incidentally, in producing the simulation results for Figures 9 and 10 (insignificant post-antenna distortion), a first simulation was performed using equation (21) on each occasion and a second simulation was performed using equation (22) involving switching between the first and second selection modes in dependence upon the reported fading loss F. It was found that the first and second simulations led to almost identical results and, accordingly, only one of the two results is shown in Figures 9 and 10.

In the case of Figure 11, the fading conditions are more challenging. In this case again it can be seen that a transmitter embodying the present invention outperforms both the transmitters (a) and (b) significantly. Again, in producing the simulation results for Figure 11, a first simulation was performed using equation (20) on each occasion and a second simulation was performed using equation (22) to switch dynamically between the two different selection modes depending on the reported fading loss F. The results of the first and second simulations were found to be almost identical and only one of these simulation results is shown in Figure 11.

The significant performance improvements shown in Figures 9 to 11 can be explained by the fact that a transmitter embodying the present invention always selects the available modulation scheme that provides the best outcome in terms of pre-antenna and post-antenna distortion. In practical systems in which the variance in fading loss may change significantly, at least over long transmission periods, the dynamic implementation of equation (22) is recommended with a relatively small threshold F.

Next, a second embodiment of the present invention will be described which is capable of operating in a transmitter having a so-called DFT-IFFT mismatch. Referring back to Figure 1, the first embodiment described above relies on the fact that the size of the DFT processing carried out by the DFT unit 2 is the same as the size $N_{FFT}$ of the IFFT processing carried out by the IFFT unit 6. In that case, there is a one-to-one correspondence between the constellation points $c_1$ to $c_N$ of the N symbols received at the input of the DFT unit 2 and the constellation points output from the IFFT unit 6.

In particular, the second and third sub-metrics $b_m$ and $y_m$, calculated by equations (8) and (9), each require N distorted constellation points. However, in a transmitter having a DFT-IFFT mismatch, the number of constellation points is deliberately reduced, compared to the original number of symbols N. This has the effect of reducing the effective transmission power.

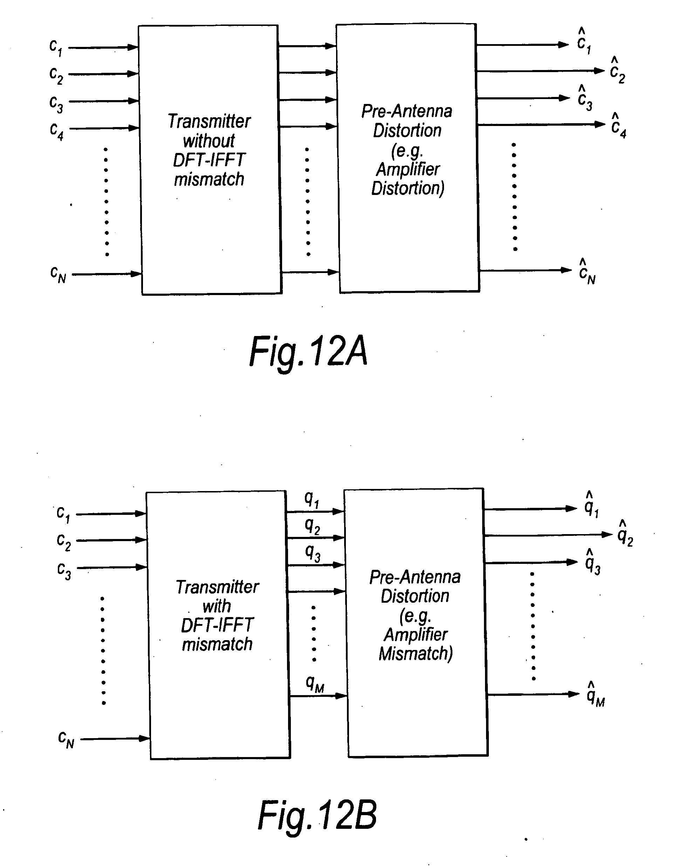

This problem is explained further with reference to Figures 12A and 12B. Figure 12A shows parts of a transmitter having no DFT-IFFT mismatch. In this case, as described previously in relation to the first embodiment, N distorted constellation points $\hat{c}_1$ to $\hat{c}_N$ can be obtained by an amplifier behaviour model unit 22 based on the N ideal constellation points $c_1$ to $c_N$. Accordingly, there is no difficulty in producing the second and third sub-metrics $b_m$ and $y_m$ of equations (8) and (9).

However, Figure 12B shows parts of a transmitter having a DFT-IFFT mismatch. In this case, the transmitter converts the original N ideal constellation points $c_1$ to $c_N$ into M transmission constellation points $q_1$ to $q_M$, where M < N. It is these transmission constellation points which will be amplified (and possibly distorted) by the pre-antenna circuitry such as the amplifier. In this case the amplifier behaviour model unit 22 must consider how the pre-antenna distortion will affect these M transmission constellation points. Accordingly, the distorted constellation points $\hat{q}_1$, to $\hat{q}_M$ need to be considered. However, because these are fewer in number than the original ideal constellation points, equations (8) and (9) are inapplicable.

Figure 13 shows parts of a transmitter according to a second embodiment of the present invention, in which this mismatch problem is solved. The transmitter 40 comprises processing circuitry 42 having a DFT-IFFT mismatch. The processing circuitry 42 therefore corresponds to the elements 2, 4, 6 and 8 shown in Figure 1, where $N_{TX}$ (= N in Figure 13) > $N_{FFT}$ (= M). In this case, N is relatively large, for example 1,800.

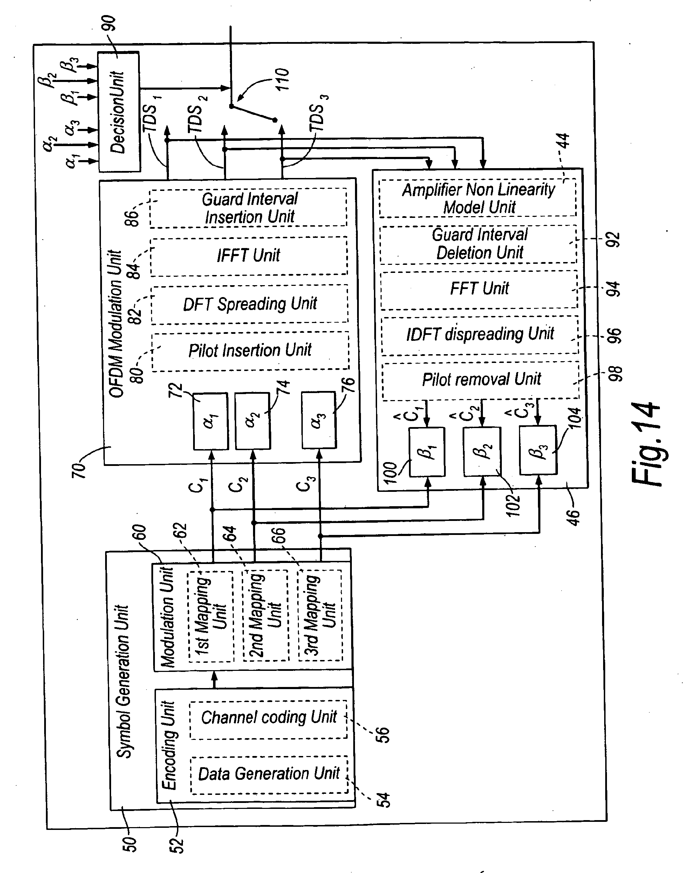

The processing circuitry 42 produces a set of M transmission constellation points $q_1$ to $q_M$ per frame based on the original N symbols. These are applied to a pre-antenna distortion modelling unit 44 which applies the expected pre-antenna distortion to the transmission constellation points to produce a set of M distorted transmission constellation points $\hat{q}_1$ to $\hat{q}_M$. The distorted transmission constellation points are applied to a reverse chain unit 46. This reverse chain unit 46 applies to the set of M distorted transmission constellation points the same or similar processing to that which is carried out in the receiver (base station) to recover the N original constellation points from the M transmission constellation points. Details of the processing carried out in the reverse chain unit 46 will be described later with reference to Figure 14.

The reverse chain unit 46 therefore outputs N distorted constellation points which capture the impact of the pre-antenna distortion in the transmitter but remove the impact of mismatch. Accordingly, the N distorted constellation points output from the reverse chain unit 46 are usable in producing the second and third sub-metrics $b_m$ and $y_m$ in equations (8) and (9).

Figure 14 shows in more detail than Figure 13 parts of the transmitter 40 of the second embodiment. The transmitter 40 comprises a symbol generation unit 50, an OFDM modulation unit 70, a decision unit 90, a selector 110 and a reverse chain unit 46. The symbol generation unit 50 comprises an encoding unit 52 and a symbol modulation unit 60. The encoding unit 52 comprises a data generation unit 54 and a channel coding unit 56. The data generation unit 54 produces a group of N symbols, which may include user data symbols and/or pilot symbols, and these N symbols are subject to channel coding by the channel coding unit 56. The resulting coded symbols are supplied to the symbol modulation unit 60.

In this example, it is assumed that there are three available modulation schemes. The first available modulation scheme is a square 16 QAM scheme. A first mapping unit 62 is included in the symbol modulation unit to carry out such square 16 QAM modulation. The second available modulation scheme in this example is (8,8) circular 16 QAM having a first ratio between the radii of the inner and outer rings of constellation points (radius 1). Here, (8,8) means that there are 8 constellation points in each ring. This mapping is implemented by a second mapping unit 64 within the symbol modulation unit 60. The third available modulation scheme in this example is (8,8) circular 16 QAM modulation having a second radii ratio (radius 2) different from the first radii ratio. This modulation scheme is implemented by a third mapping unit 66 in the symbol modulation unit 60.

The set of N symbols is subject to modulation by each of the mapping units 62, 64 and 66 to produce three sets of ideal constellation points $C_1$, $C_2$, $C_3$ corresponding respectively to the different available modulation schemes. The three sets of ideal constellation points are supplied to the OFDM modulation unit 70 and to the reverse chain unit 46.

The OFDM modulation unit 70 comprises respective first, second and third metric determining units 72, 74 and 76. The first metric determining unit 72 subjects the set of constellation points $C_1$ for the first available modulation scheme to processing in accordance with equations (6) and (11) to produce a first normalised sub-metric $\alpha_1$ for that modulation scheme. The second metric determining unit 74 carries out the processing of equations (6) and (11) on the set of constellation points $C_2$ for the second available modulation scheme to produce a first normalised sub-metric $\alpha_2$ for that modulation scheme. The third metric determining unit 76 subjects the set of constellation points $C_3$ for the third available modulation scheme to the processing of equations (6) and (11) to produce a first normalised sub-metric $\alpha_3$ for that modulation scheme.

In the OFDM modulation unit 70, each set of N modulated symbols is also subjected to the usual processing to produce time-domain samples for each available modulation scheme. The OFDM modulation unit 70 comprises a pilot insertion unit 80, a DFT spreading unit 82, an IFFT unit 84 and a guard interval (cyclic prefix) insertion unit 86. The purpose and constitution of each of these units is well known in the art and is not described further here.

Accordingly, for each available modulation scheme, a series of time domain samples $TDS_1$, $TDS_2$ or $TDS_3$ is output from the OFDM modulation unit 70 to the selector 110. Because of the DFT-IFFT mismatch, the number of constellation points embodied in each series of time domain samples is M, where M < N. Thus, there are M time-domain symbols, and each time-domain symbol has a constellation point. Of course, there are several time-domain samples per time-domain symbol, but do all samples for a particular symbol have the same constellation point.

The respective series of time domain samples $TDS_1$, $TDS_2$ and $TDS_3$ for the three available modulation schemes are supplied to the reverse chain unit 46.

The reverse chain unit 46 comprises a pre-antenna distortion modelling unit 44 which applies to each series of time-domain samples an expected pre-antenna distortion in accordance, for example, with equation (5) described above. After subjecting the time-domain samples to such expected pre-antenna distortion, the series of time domain samples for the three available modulation schemes are each subjected to processing which corresponds to that carried out in the receiver on receipt of the transmission signal to recover therefrom the original N symbols. Thus, the reverse chain unit 46 further comprises a guard interval removal unit 92, an FFT processing unit 96, an IDFT despreading unit 96 and a pilot removal unit 98. Again, the purpose and constitution of each of these units is well-known in the art and is not described further here. The result of the processing carried out by the units 92, 94, 96 and 98 is that at respective outputs of the pilot removal unit 98 a set of distorted constellation points $\hat{C}_1$ is available for the first modulation scheme, a set $\hat{C}_2$ of distorted constellation points is available for the second modulation scheme, and a set $\hat{C}_3$ of distorted constellation points is available for the third modulation scheme. Each of these sets of distorted constellation points comprises N constellation points.

The reverse chain unit 46 also comprises first, second and third metric determining units 100, 102 and 104. The first metric determining unit 100 corresponds to the first available modulation scheme and receives the set $C_1$ of ideal constellation points for that modulation scheme and the set $\hat{C}_1$ of distorted constellation points for that scheme. The second metric determining unit 102 corresponds to the second available modulation scheme and receives the set $C_2$ of ideal constellation points for that modulation scheme and the set $\hat{C}_2$ of distorted constellation points for that modulation scheme. The third metric determining unit 104 corresponds to the third available modulation scheme and receives the set $C_3$ of ideal constellation points for that modulation scheme and the set $\hat{C}_3$ of distorted constellation points for that modulation scheme. Each of the first, second and third metric determining units 100, 102 and 104 carries out the processing of equations (8) and (12) on the two sets of constellation points it receives to produce for its corresponding available modulation scheme a second normalised sub-metric $\beta_1$, $\beta_2$ or $\beta_3$.

Then, in this embodiment, the first normalised sub-metrics $\alpha_1$, $\alpha_2$ and $\alpha_3$ produced by the metric determining units 72, 74 and 76 respectively and the second normalised sub-metrics $\beta_1$, $\beta_2$ and $\beta_3$ produced respectively by the metric determining units 100, 102 and 104 are supplied to the decision unit 90. The decision unit 90 selects one of the available modulation schemes according to:

$$
\begin{cases}
\hat{m} = \max_{m}\ (\alpha_m + \beta_m) & Loss\ =\ \left( \sum_{i=1}^{M} p_i \right) > T \\
\hat{m} = \max_{m}\ (\alpha_m) & else
\end{cases}
$$

$$(23)$$

where M is the number of available modulation schemes.

Here, $\hat{m}$ is the selected modulation scheme. The decision unit 90 calculates a total power loss measure for the frame similar to that described above with reference to equations (14) to (17). Here T is a loss threshold. When the total power loss measure (the sum of the individual power loss measures for all M available modulation schemes) exceeds the loss threshold T it is judged that amplifier loss (pre-antenna distortion) is significant. In this case, the transmitter operates in a first selection mode in which the modulation scheme is selected based on both the first and second sub-metrics $\alpha_m$ and $\beta_m$. However, when the loss is below the threshold, it is judged that the pre-antenna distortion is not likely to be significant. In this case, the transmitter switches to a second selection mode in which the selection is based solely on the first sub-metrics $\alpha_m$.

The decision unit 90 supplies a control signal to the selector 110 to select the series of time-domain sample corresponding to the selected modulation scheme.

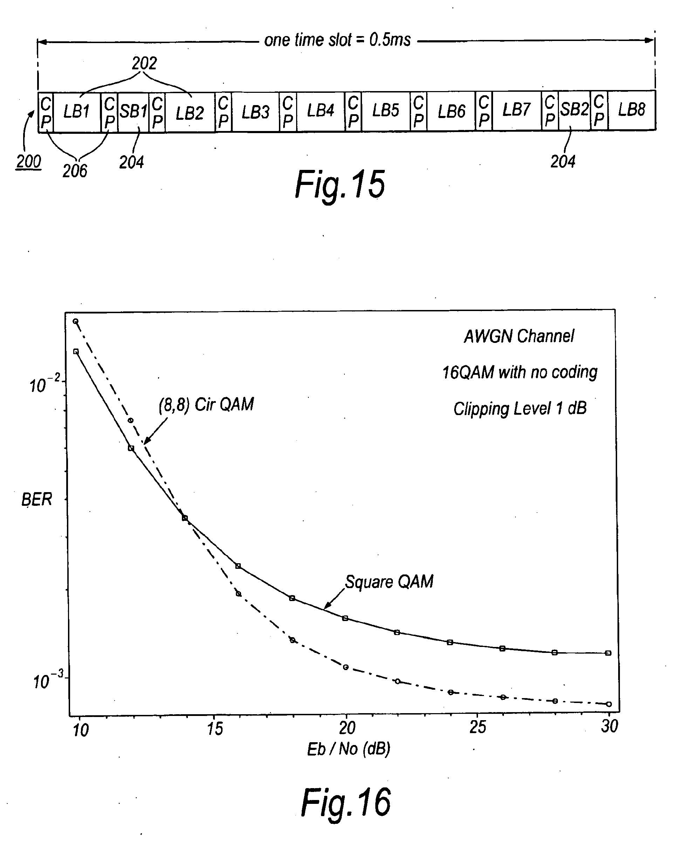

The performance of the second embodiment was investigated by simulations. Various different experimental simulations were carried out. For the simulations, a frame structure shown in Figure 15 was used. This frame structure has been proposed for SC-FDMA for 3G LTE, see for example 3GPP TR 25 814 v.1.2.2. (2006-3), Figure 9.1.1-4. As shown in Figure 15, a sub-frame 200 is of duration 0.5m sec. The sub-frame comprises six long blocks LB#1 to LB#6 202 and two short blocks SB#1 and SB#2 204. Each block is preceded by a cyclic prefix (CP) 206. Short blocks 204 are used for reference signals for coherent demodulation and/or control/data transmission. Long blocks 202 are used for control and/or data transmission. The duration of the short blocks is half the duration of each of the long blocks. The number N of symbols transmitted per sub-frame may be, for example, 450, 900,1800, 3600, 5400 or 7200.

It was assumed that a new modulation scheme is selected for each sub-frame, i.e. every 0.5msec, and that N = 1800 symbols are transmitted in each sub-frame. Of course, in other implementations of the inventions for 3GPP, and a new modulation scheme could be selected only once per entire frame (i.e. multiple successive subframes) or more than once per frame but less than every sub-frame.

The simulation parameters which were used for the simulations are set out in Table 1 below.

**Table 1 Simulation Parameters**

| Parameters | Values |
|---|---|
| Carrier Frequency | 2GHz |
| Propagation conditions | AWGN and 6-ray TU channel |
| Sampling Frequency | 7.679 MHz |
| Bandwidth | 5 MHz |
| Roll-off factor of filter | No used |
| Sub frame length (TTI) | 0.5ms |
| Transmission Scheme | Localised FDMA |
| Modulation Schemes | Square 16QAM, (8,8) Circular 16QAM |
| Data Block size (Long Block Size) | 6 with each occupying 300 sub carriers |
| Pilot Block size (Short Block Size) | 2 with each occupying 150 sub carriers. |
| CP Lengths | 31 samples x 7 + 39 samples x 1 |
| Channel Estimation (CE) algorithm | Perfect channel estimation |
| Fast fading model | Jakes spectrum |
| Channel coding | ½, 1/3 with Turbo Coding and no coding. |
| Tail bits | 6 and k=4 |
| No. of iterations for Turbo Coder | 8 |
| Metric for Turbo Coder | Max-Log-MAP |
| Input to Turbo Decoder | Soft |
| Receiver | 2-branch receiver reception, Perfect equalization |

Three different experiments were performed.

In the first experiment, by way of background, the performance of different individual modulation schemes, if used exclusively, was investigated under different conditions. For the first experiment, the channel between the transmitter and the receiver was assumed to be an AWGN channel. It was also assumed that no coding is performed. The two modulation schemes under consideration were (8,8) circular QAM and square QAM.

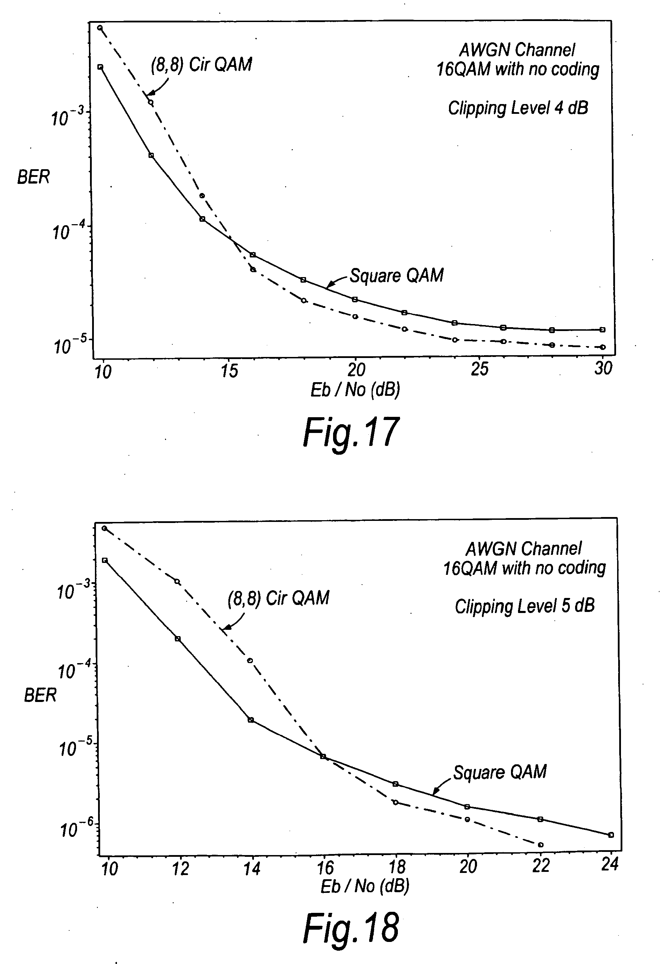

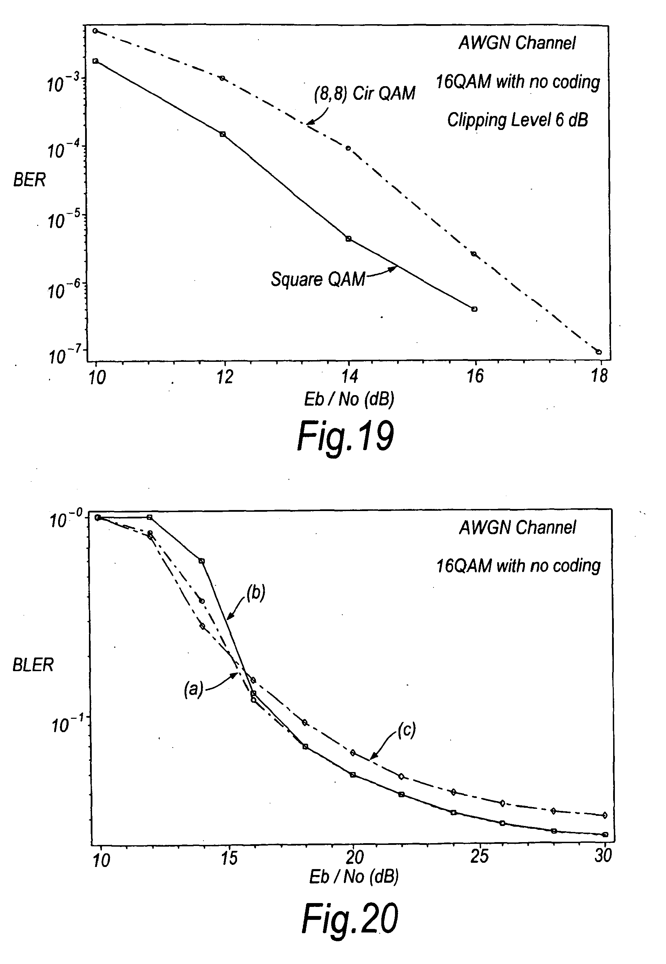

Figures 16 to 19 each show a variation of a bit error rate with ratio of bit energy to noise power spectral density Eb/No in dB. In the case of Figure 16, the amplifier clipping level was assumed to be 1dB. In the case of Figure 17 the clipping level was assumed to be 4dB. In the case of Figure 18 the amplifier clipping level was assumed to be 5dB. In the case of Figure 19 the amplifier clipping level was assumed to be 6dB. Figures 16 to 19 show that by increasing the clipping level (i.e. providing an amplifier with a better back-off capability) the performance of both schemes improves (i.e. the BER for a given Eb/No value decreases). However, at all but the highest clipping level considered the circular QAM scheme has a better performance at high Eb/No values whereas the square QAM scheme has a better performance for lower Eb/No values. At the highest clipping level considered (6dB) the square QAM scheme outperformed the circular QAM scheme at all of the Eb/No values considered.

Figure 20 is a graph showing a variation of a block error rate (BLER) with Eb/No for (a) a transmitter according to the second embodiment of the present invention, (b) a transmitter employing exclusively (8,8) circular QAM with a radii ratio of 2.0, and (c) a transmitter employing exclusively a square QAM scheme. For the simulations of Figure 20 it was assumed that for half of the transmission period the clipping level was 4dB (as in Figure 17) and for the other half of the transmission period the clipping level was 6dB (as in Figure 19). By varying the clipping level in this way, the intention is to simulate real conditions. In a practical situation, the transmitter will have different limited power availabilities under different transmission conditions, for example depending on the position of the transmitter (UE) within a cell. The changes of power availability are equivalent to having different amplifier clipping levels. It can be seen from Figure 20 that a transmitter embodying the present invention manages to follow closely the performance of the best modulation scheme at each different Eb/No value. In particular, for relatively high Eb/No values the performance is almost the same as that of the superior circular QAM scheme, whilst at relatively low Eb/No values the performance follows closely that of the superior square QAM scheme.

In the first experiment, incidentally, it is assumed that the receiver has only one antenna.

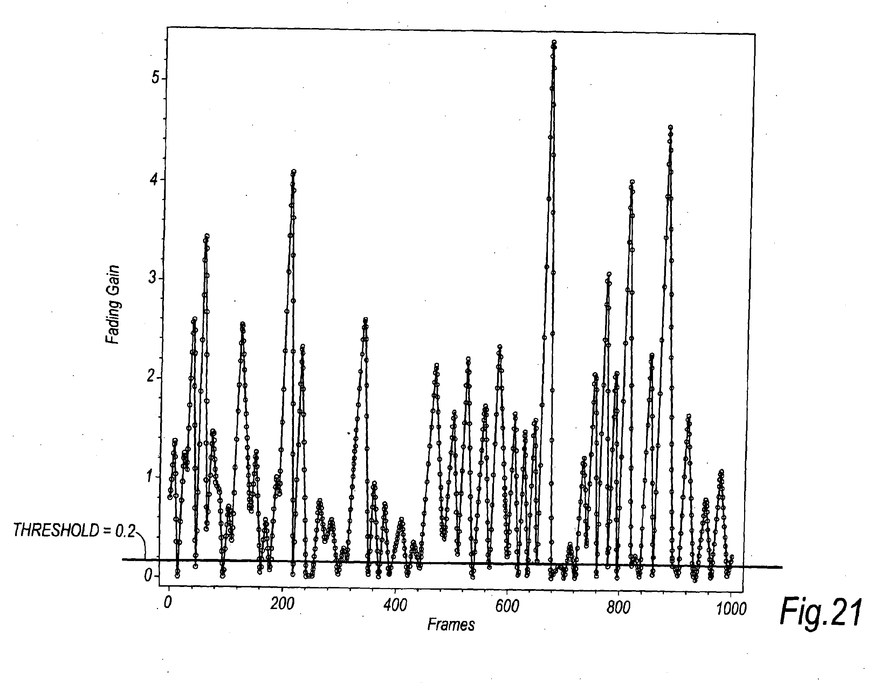

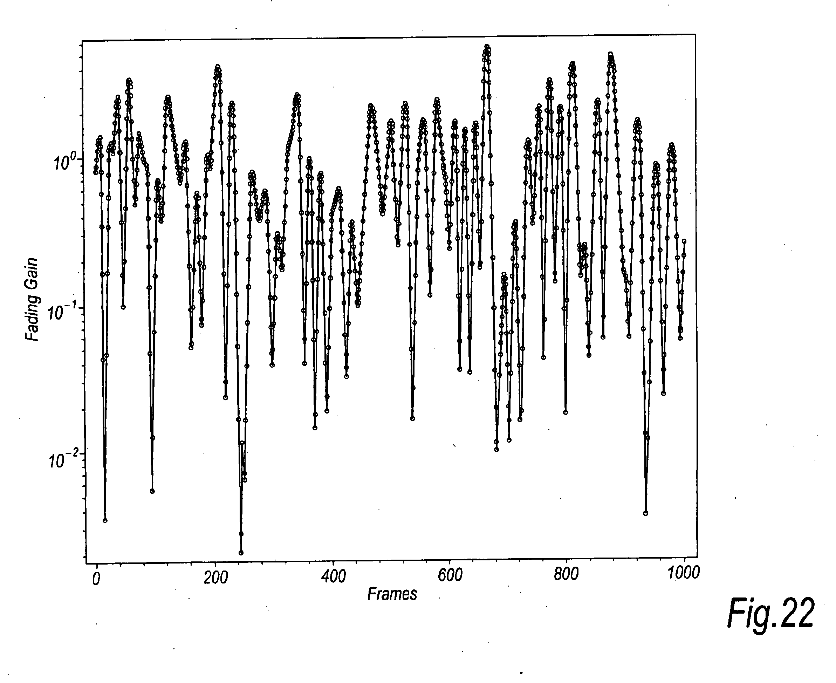

A second experiment was performed to investigate the performance of the second embodiment, relative to other transmitters using one particular scheme exclusively, under fading conditions. Figure 21 shows the assumed fading gain over a series of 1,000 frames considered for the simulation using a non-logarithmic scale. Figure 22 shows the same variation of fading gain over the frames but to a logarithmic scale. For this experiment, it was assumed that the second embodiment of the invention has three available modulation schemes and that coding is used. In all cases, two of the three available modulation schemes were (8,8) QAM schemes having different radii ratios. The third available modulation scheme was assumed to be a square QAM scheme.

Two different scenarios were considered. In the first scenario, it was assumed that none of the transmitters under consideration was capable of changing to QPSK under any channel conditions. As is known in the art of adaptive modulation and coding, conventionally, as the channel conditions deteriorate, a transmitter may switch from 16QAM to QPSK to provide more robust signalling (albeit at a lower data rate). For the purposes of the first scenario, it is assumed that such switching is not possible so that only a single 16 QAM scheme is usable (or in the case of a transmitter embodying the present invention only switching between different available 16 QAM schemes is possible).

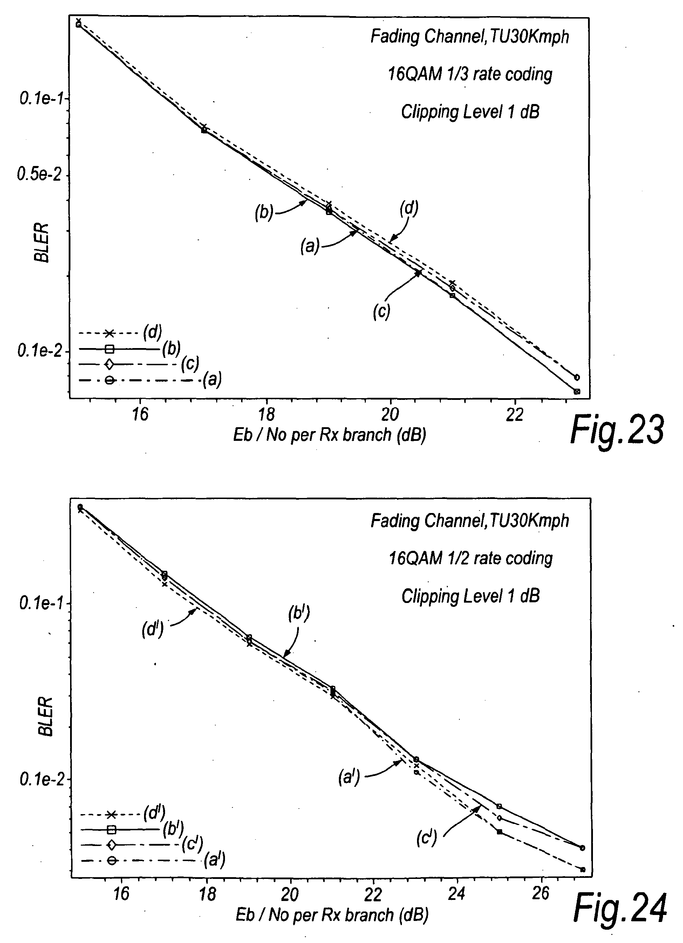

For the first scenario the simulation results are shown in Figures 23 and 24. Both figures are graphs showing a variation of BLER with Eb/No per receive antenna branch. It is assumed that there is two antenna receive diversity. The clipping level is assumed to be 1dB. Figure 23 the coding is assumed to be 1/3 rate coding. In this case, and in all other cases in which 1/3 rate coding is assumed, the two available circular QAM schemes in a transmitter (a) according to the second embodiment of the invention are assumed to have radii ratios of 1.5 and 1.8 respectively. The third available modulation scheme is assumed to be square QAM. Figure 23 compares the performance of the transmitter (a) according to the invention with (b) a transmitter employing exclusively the 1.5 circular QAM scheme, (c) a transmitter employing exclusively the 1.8 circular QAM scheme and (d) a transmitter employing exclusively the square QAM scheme.

In Figure 24 the coding rate is assumed to be 1/2. In this case, the radii ratios of the circular schemes are changed to be 2.0 and 2.2 respectively instead of 1.5 and 1.8 respectively in Figure 23. For this reason the results are presented as (a') to (d'), corresponding respectively to the transmitters (a) to (d) in Figure 23.

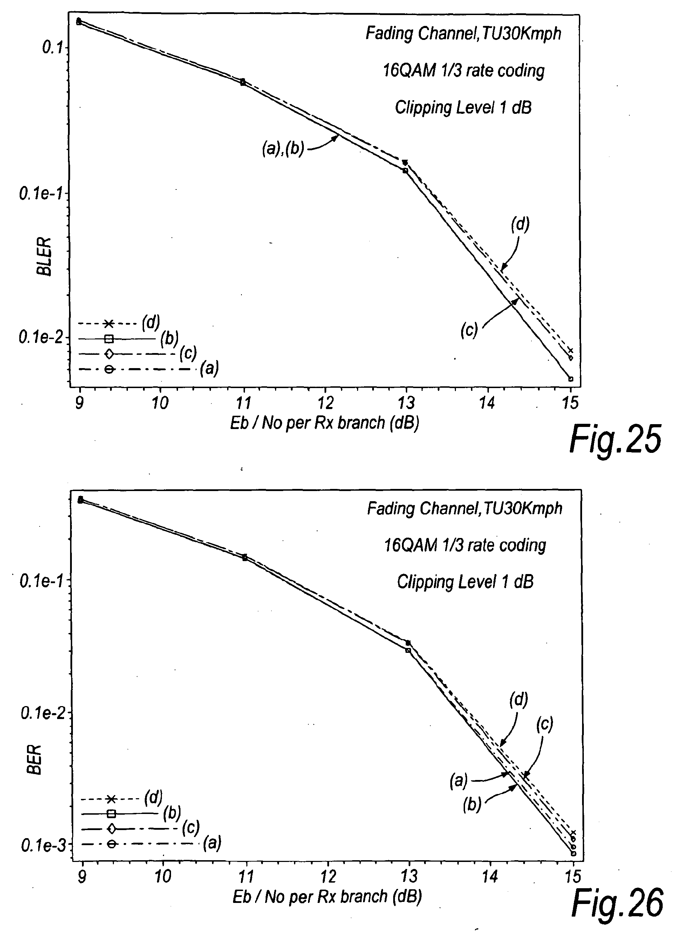

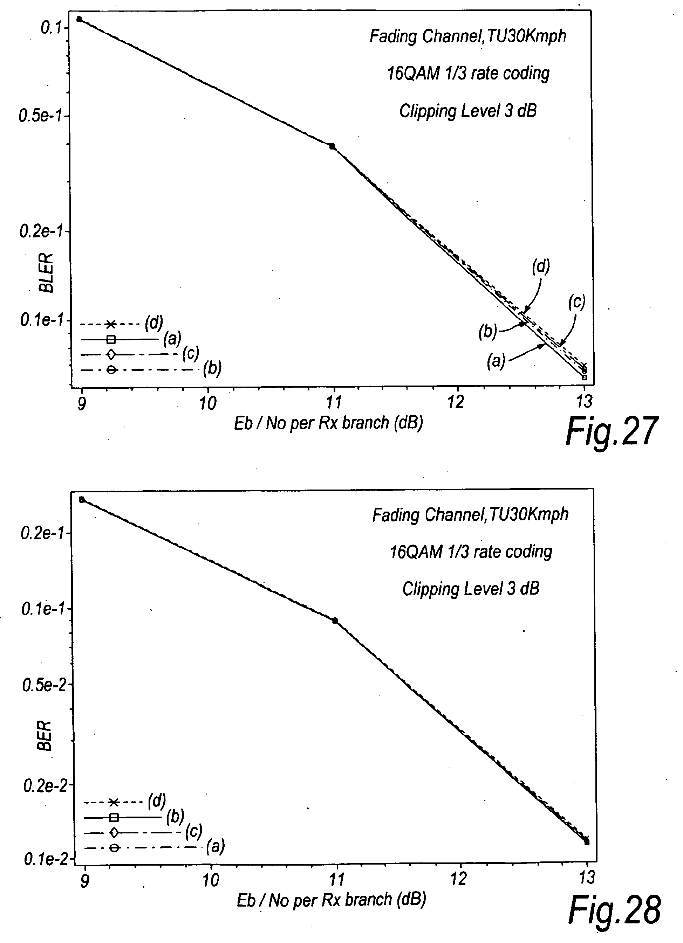

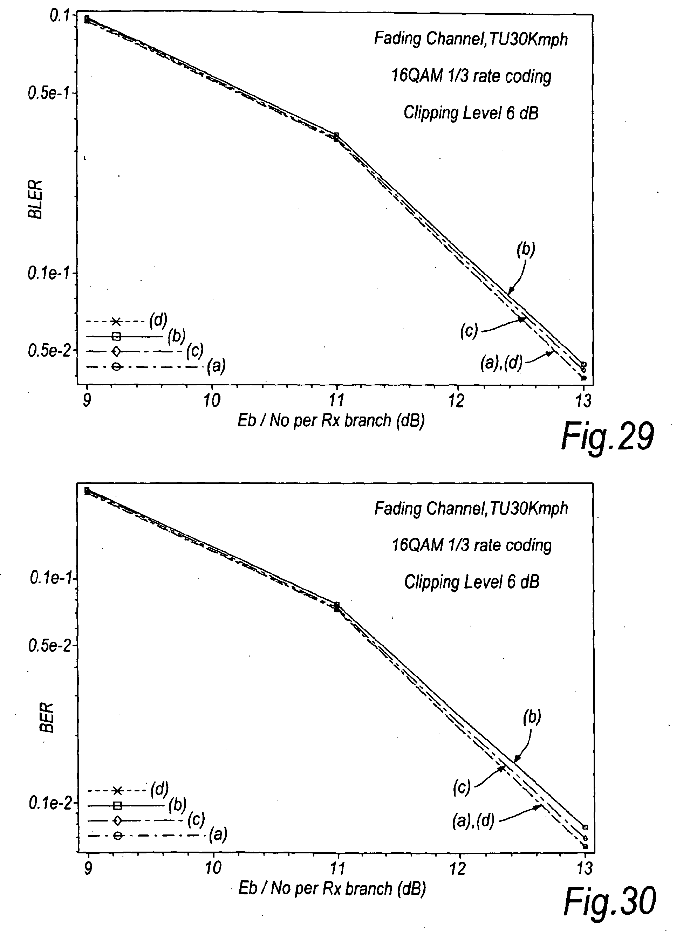

The second scenario considered in the second experiment was that feedback from link adaptation is available. Referring back to Figure 21, it is assumed that when the fading gain is below a predetermined threshold (0.2 in this second scenario) 16QAM is not used and instead the transmitter switches to QPSK modulation. Figures 25 and 26 present performance results for the transmitters (a) to (d) using a coding rate of 1/3 and assuming a clipping level of 1dB. Figure 25 presents a variation of the block error rate with Eb/No per receive antenna branch and Figure 26 presents a variation of the bit error rate with Eb/No per receive antenna branch. Figures 27 and 28 correspond to Figures 25 and 26 respectively but for a higher clipping level of 3dB. Figures 29 and 30 also correspond respectively to Figures 25 and 26 respectively but for a clipping level of 6dB.

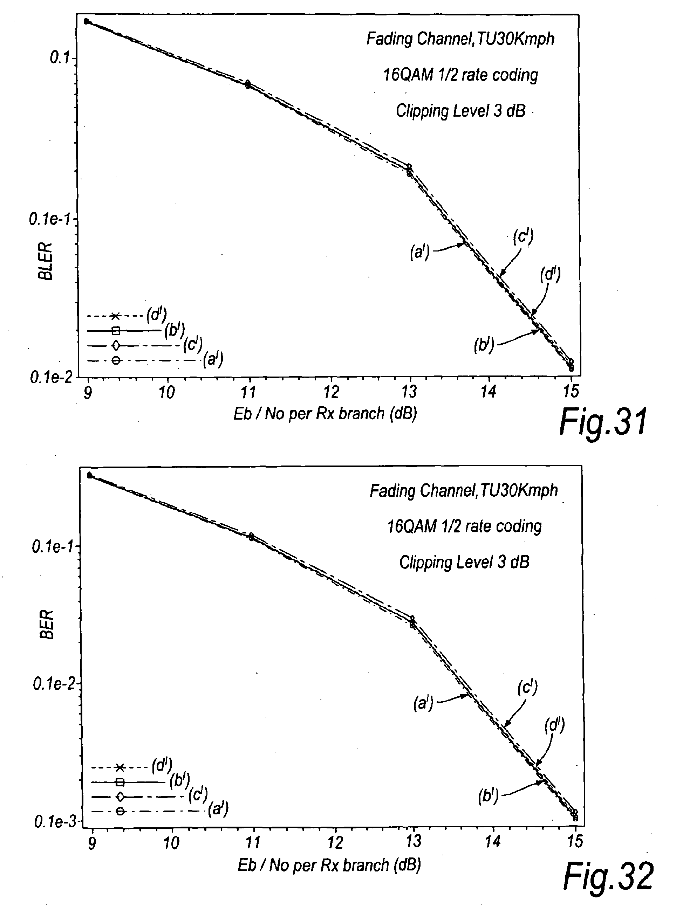

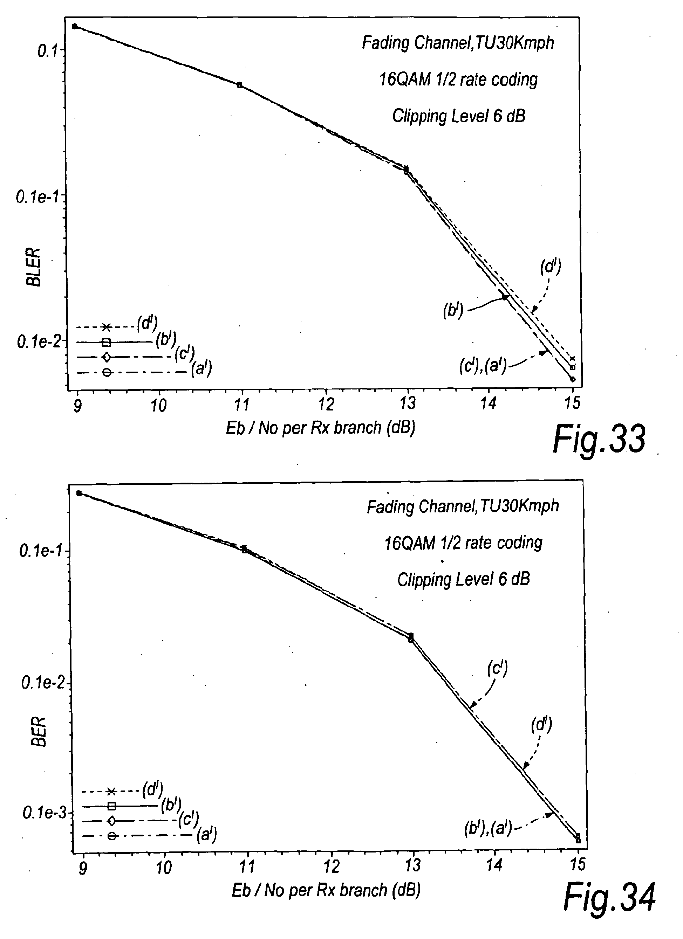

Figures 31 and 32 present performance results for the transmitters (a') to (d') using a coding rate of 1/2. Figure 31 presents BLER variation with Eb/No and Figure 31 presents BER variation with Eb/No. The clipping level is 3dB. Figures 33 and 34 correspond respectively to Figures 31 and 32 but assume a higher clipping level of 6dB.

It can be seen that the transmitters (a) and (a') according to the second embodiment perform better than the comparable transmitters (b) to (d) and (b') to (d') using a single 16 QAM scheme (or switching between a single 16 QAM scheme and QPSK in the case of the second scenario).

Finally, the performance of a transmitter (a) according to the second embodiment was compared with that of the transmitters (b) to (d) in terms of a so-called "cubic metric". The cubic metric (CM) is a metric which has been devised as an alternative to a peak-to-average power ratio (PAPR) for signal characterisation. The cubic metric is believed to be better correlated to the power amplifier back-off required to pass the various 3GPP signals. Further information regarding the cubic metric and the way in which it is calculated can be found, for example, in "Comparison of PAR and Cubic Metric for power de-rating", TSG RAN WG1 #37, Tdoc#R1-040642, Montreal, Canada, May 10-14, 2004.

To investigate the performance in terms of the cubic metric, a cubic metric value was produced for each of the transmitters (a) to (d) for each simulated frame under the conditions of experiment 2 using 1/3 rate coding. The results are presented in Table 2 below.

**Table 2**

| Modulation (1/3 Rate Coding) | Cubic Metric (Mean) | Cubic Metric (Max) |
|---|---|---|
| (d) Square 16 QAM | 2.913 | 3.265894 |
| (c) Circular 16 QAM (Radius Ratio=1.8) | 2.811 | 3.109307 |
| (b) Circular 16 QAM (Radius Ratio=1.5) | 2.451 | 2.722559 |
| (a) Second embodiment | 2.469 | 3.128565 |

In Table 2 the second column presents the mean value of the cubic metric over all of the simulated frames. It can be seen that the mean CM value for the transmitter (a) according to the invention is almost as good as that of the transmitter (b) using the best circular 16 QAM scheme. The third column in Table 2 presents the maximum CM value over the series of simulated frames. Although this maximum CM value represents only the situation for one frame and is not a measure of the overall performance for the entire transmission period, it can be seen that the maximum CM value for a transmitter (a) according to the invention is lower than that of the transmitter (d) using 16 square QAM.

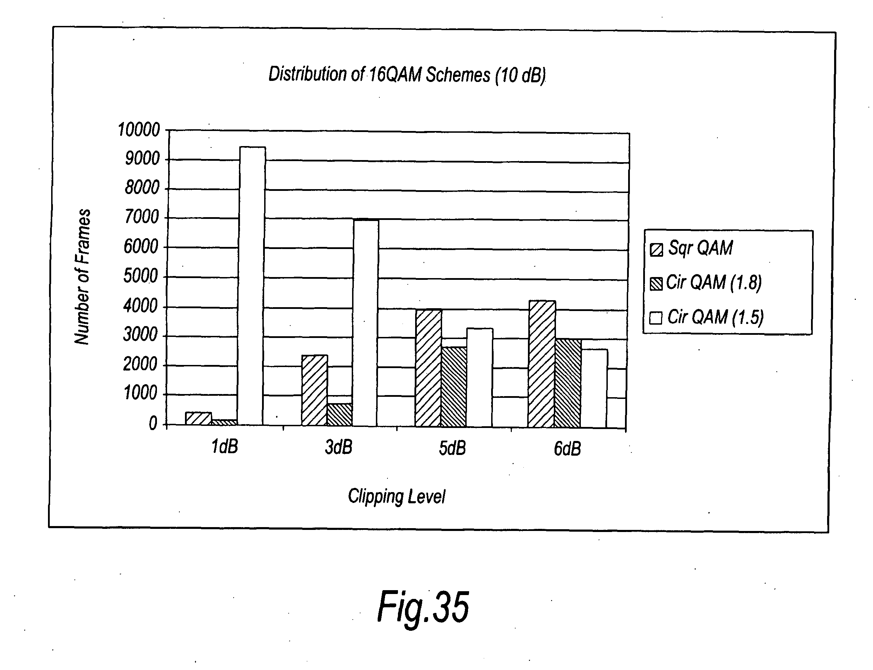

Figure 35 is a histogram showing statistics relating to the selection of the three available modulation schemes in the transmitter (a) according to the invention for different clipping levels. A series of 10,000 frames were considered. As can be seen from Figure 35, for lower clipping levels the transmitter (a) selects the circular 1.5 QAM scheme more often than it selects the other modulation schemes. As the amplifier clipping level is increased, the frequency of selection of this circular modulation scheme declines while the frequencies of selection of the other modulation schemes increase. At a clipping level of 6dB, it can be seen that the square 16 QAM scheme is selected most frequently.

As the simulation results show, under all the possible levels of amplifier back-off availability (i.e. clipping level), a transmitter embodying the present invention is able to switch to the best possible modulation scheme among the available modulation schemes, achieving almost 0.5dB better performance in terms of mean cubic metric than square 16 QAM while outperforming it in terms of BLER in the case of a radio channel with fading.

**Claims**

1.  A method of adapting a modulation scheme applied by a transmitter to a transmission signal in a single-carrier frequency-division wireless communication system, the method comprising:

    receiving at the transmitter N symbols to be transmitted using said transmission signal, where N is a natural number greater than or equal to 1, and, for each of a plurality of available modulation schemes, determining a constellation point of the or each said symbol if the modulation scheme concerned is applied to transmit the symbol;
    for each of said plurality of available modulation schemes, producing, based on the determined constellation point or points at least one measure of an expected transmission performance if the available modulation scheme is applied to the transmission signal when transmitting said N symbols;
    selecting one of the available modulation schemes based on the or at least one said measure; and
    transmitting the N symbols using said transmission signal whilst applying thereto the selected modulation scheme, wherein
    the or at least said measure for a particular available modulation scheme is a metric obtained by a first metric or a combination of a first and a second metric wherein the method further comprises:
    determining for the or each said symbol an ideal constellation point and a distorted constellation point, wherein the distorted constellation point is determined using an amplifier behaviour model, and producing said first and second metrics for a particular available modulation scheme, the first metric being dependent on a distance between the determined ideal constellation point of the or each said symbol in the particular modulation scheme concerned and at least one other constellation point available in the particular modulation scheme concerned, and the second metric being dependent on a distance between the determined distorted constellation point of the or each said symbol in the particular modulation scheme concerned and at least one other available constellation point.

2. A method as claimed in claim 1, wherein at least one determined constellation point is a distorted constellation point reflecting an expected distortion of the transmission signal.

3. A method as claimed in claim 2, wherein determining the distorted constellation point or points for each said available modulation scheme comprises:

   generating a potential transmission signal for the modulation scheme concerned;
   processing the potential transmission signal to apply thereto an expected distortion; and
   determining the distorted constellation point(s) based on the processed potential transmission signal having said distortion.

4. A method as claimed in claim 2, wherein the transmitter generates the transmission signal by using N-point DFT processing and M-point IFFT processing, where M is different from N, so that the transmission signal based on the received N symbols has M constellation points, and determining the distorted constellation point or points for each said available modulation scheme comprises:

   generating a potential transmission signal for the modulation scheme concerned having M constellation points;
   processing the potential transmission signal having said M constellation points to apply thereto an expected distortion;
   in the transmitter, applying to the processed potential transmission signal having M distorted constellation points processing conforming substantially to processing carried out in a receiver of the wireless communication system on the received transmission signal to generate a distorted signal having N distorted constellation points.

5. A method as claimed in claim 3 or 4, wherein said processing of the potential transmission signal to apply thereto an expected distortion comprises comparing an amplitude of the potential transmission signal with a predetermined value and, if the amplitude exceeds the predetermined value, limiting the amplitude of the potential transmission signal to said predetermined value and adjusting a phase of the potential transmission signal in dependence upon the original unlimited amplitude.

6. A method as claimed in claim 2, 3, 4 or 5, wherein said distorted constellation point is determined taking account of expected distortion of the transmission signal in the transmitter prior to wireless transmission.

7. A method as claimed in any preceding claim, wherein at least one determined constellation point is an ideal constellation point assuming that there is no distortion of the transmission signal.

8. A method as claimed in any preceding claim, wherein said metric is dependent on the respective distances between said determined constellation point and a plurality of other available constellation points neighbouring the determined constellation point.

9. A method as claimed in any preceding claim, wherein said metric is dependent on the respective distances between said determined constellation point and all other available constellation points in the particular modulation scheme concerned.

10. A method as claimed in any preceding claim, further comprising judging if it is expected that the transmitter will distort the transmission signal significantly prior to wireless transmission and, if not, modifying the basis on which the available modulation scheme is selected in the selecting step.

11. A method as claimed in claim 10, wherein the judgement involves generating a potential transmission signal for at least one said available modulation scheme, and estimating an expected distortion of that potential transmission signal in the transmitter.

12. A method as claimed in claim 10 or 11 when read as appended to claim 1, wherein if the judgement is that no significant distortion by the transmitter is expected, the modulation scheme is selected in the selecting step without taking into account the second distance measure.

13. A method as claimed in any preceding claim, further comprising judging if it is expected that fading loss in a wireless channel from the transmitter to a receiver of said wireless communication system will be significant and, if so, modifying the basis on which the modulation scheme is selected in the selecting step.

**14.** A method as claimed in claim 13, further comprising estimating the fading loss in the receiver and supplying from the receiver to the transmitter information relating to the estimated fading loss and modifying the basis on which the modulation scheme is selected in the selecting step in dependence upon the supplied information.

**15.** A method as claimed in any preceding claim, wherein at least two such metrics are produced, each based on the determined constellation point or points but calculated in a different way from each other said metric, and the method further comprises switching between a first selection mode, in which the selection of the modulation scheme is based on a first one, or a first combination, of said metrics, and a second selection mode in which the selection of the modulation scheme is based on a second one of the metrics, different from said first metric, or on a second combination of the metrics different from said first combination.

**16.** A method as claimed in any preceding claim, wherein at least one said metric for each said available modulation scheme is also dependent on an expected power loss in the transmitter if the available modulation scheme concerned is applied to the transmission signal when transmitting said N symbols.

**17.** A transmitter for use in a single-carrier frequency-division wireless communication system, the transmitter comprising:

receiving means for receiving N symbols to be transmitted using a transmission signal, where N is a natural number greater than or equal to 1;
constellation point determining means for determining, for each of a plurality of available modulation schemes, a constellation point of the or each said symbol if the modulation scheme concerned is applied to transmit the symbol;
measure producing means for producing, for each of said plurality of available modulation schemes, at least one measure of an expected transmission performance if the available modulation scheme is applied to the transmission signal when transmitting said N symbols, the or each said measure being based on the determined constellation point or points;
selecting means for selecting one of the available modulation schemes based on the or at least one said measure; and
transmitting means for transmitting the N symbols using said transmission signal whilst applying thereto the selected modulation scheme, wherein .
the constellation point determining means further is adapted to determine for the or each said symbol an ideal constellation point and a distorted constellation point, wherein the distorted constellation point is determined using an amplifier behaviour model, and wherein
the at least one measure for a particular available modulation scheme, produced by said measure producing means, is a metric obtained by a first metric or a combination of a first and a second metric and wherein
the measure producing means further is adapted to produce said first and second metrics for a particular available modulation scheme, the first metric being dependent on a distance between the determined ideal constellation point of the or each said symbol in the particular modulation scheme concerned and at least one other constellation point available in the particular modulation scheme concerned, and the second metric being dependent on a distance between the determined distorted constellation point of the or each said symbol in the particular modulation scheme concerned and at least one other available constellation point.

**18.** User equipment, for use in a single-carrier frequency-division wireless communication system, comprising a transmitter as claimed in claim 17, said transmission signal being an uplink signal transmitted by the user equipment to a base station of the system.

**19.** A single-carrier frequency-division wireless communication system comprising a transmitter as claimed in claim 17 and at least one receiver adapted to receive the transmission signal.

**20.** An operating program which, when executed by a processor in a transmitter of a single-carrier frequency-division wireless communication system, causes the transmitter to:

receive N symbols to be transmitted using a transmission signal, where N is a natural number greater than or equal to 1, and, for each of a plurality of available modulation schemes, to determine a constellation point of the or each said symbol if the modulation scheme concerned is applied to transmit the symbol;
produce, for each of said plurality of available modulation schemes, based on the determined constellation point or points, at least one measure of an expected transmission performance if the available modulation scheme is applied to the transmission signal when transmitting said N symbols;

select one of the available modulation schemes based on the or at least one said measure; and

transmit the N symbols using said transmission signal whilst applying thereto the selected modulation scheme, wherein

the at least one said measure for a particular available modulation scheme is a metric obtained by a first metric or a combination of a first and a second metric and wherein,

for the or each said symbol, an ideal constellation point and a distorted constellation point are determined, wherein the distorted constellation point is determined using an amplifier behaviour model, and producing said first and second metrics for a particular available modulation scheme, the first metric being dependent on a distance between the determined ideal constellation point of the or each said symbol in the particular modulation scheme concerned and at least one other constellation point available in the particular modulation scheme concerned, and the second metric being dependent on a distance between the determined distorted constellation point of the or each said symbol in the particular modulation scheme concerned and at least one other available constellation point.

## Patentansprüche

1. Verfahren zum Anpassen eines Modulationsschemas, das durch einen Sender auf ein Sendesignal in einem drahtlosen Einzelträger-Frequenzteilungskommunikationssystem angewendet wird, welches Verfahren umfasst:

Empfangen, in dem Sender, von N Zeichen, die unter Verwendung des Sendesignals zu senden sind, wobei N eine natürliche Zahl größer gleich 1 ist, und Bestimmen, für jedes von einer Vielzahl von verfügbaren Modulationsschemata, eines Konstellationspunktes des oder jedes genannten Zeichens, falls das betreffende Modulationsschema angewendet wird, um das Zeichen zu senden;

Erzeugen, für jedes von der Vielzahl von verfügbaren Modulationsschemata, wenigstens eines Maßes einer erwarteten Sendeleistung, auf der Basis des bestimmten Konstellationspunktes oder der bestimmten Konstellationspunkte, falls das verfügbare Modulationsschema auf das Sendesignal angewendet wird, wenn die N Zeichen gesendet werden;

Selektieren eines der verfügbaren Modulationssehemata auf der Basis des wenigstens einen Maßes; und

Senden der N Zeichen unter Verwendung des Sendesignals, während das selektierte Modulationsschema darauf angewendet wird, bei dem

das wenigstens eine Maß für ein besonderes verfügbares Modulationsschema eine Metrik ist, die durch eine erste Metrik oder eine Kombination einer ersten und einer zweiten Metrik erhalten wird, und bei dem das Verfahren ferner umtasst:

Bestimmen, für das oder jedes genannte Zeichen, eines idealen Konstellationspunktes und eines verzerrten Konstellationspunktes, bei dem der verzerrte Konstellationspunkt unter Verwendung eines Verstärkerverhaltensmodells bestimmt wird, und Erzeugen der ersten und zweiten Metriken für ein besonderes verfügbares Modulationsschema, wobei die erste Metrik abhängt von einer Distanz zwischen dem bestimmten idealen Konstellationspunkt des oder jedes genannten Zeichens in dem betreffenden besonderen Modulationsschema und wenigstens einem anderen Konstellationspunkt, der in dem betreffenden besonderen Modulationsschema verfügbar ist, und die zweite Metrik abhängt von einer Distanz zwischen dem bestimmten verzerrten Knnatellationspunkt des oder jedes genannten Zeichens in dem betreffenden besonderen Modulationschema und wenigstens einem anderen verfügbaren Konstellationspunkt.

2. Verfahren nach Anspruch 1, bei dem wenigstens ein bestimmter Konstellationspunkt ein verzerrter Konstellationspunkt ist, der eine erwartete Verzerrung des Sendesignals reflektiert.

3. Verfahren nach Anspruch 2, bei dem das Bestimmen des verzerrten Konstellationspunktes oder der verzerrten Konstellationspunkte für jedes genannte verfügbare Modulationsschema umfasst:

Erzeugen eines potentiellen sendesignals für das betreffende Modulationsschema;
Verarbeiten des potentiellen Sendesignals, um auf dieses eine erwartete Verzerrung anzuwenden; und
Bestimmen des verzerrten Konstellationspunktes (der verzerrten Konstellationspunkte) auf der Basis des verarbeiteten potentiellen Sendesignals, das die Verzerrung aufweist.

4. Verfahren nach Anspruch 2, bei dem der Sender das Sendesignal unter Verwendung der N-Punkte-DFT-Verarbeitung und M-Punkte-IFFT-Verarbeitung erzeugt, wobei sich M von N unterscheidet, so dass das Sendesignal, das auf den empfangenen N Zeichen basiert, M Konstellationspunkte hat, und das Bestimmen des verzerrten Konstellationspunktes oder der verzerrten Konstellationspunkte für jedes genannte verfügbare Modulationsschema umfasst:

Erzeugen eines potentiellen Sendesignals für das betreffende Modulationsschema, das M Konstellationspunkte hat;

Verarbeiten des potentiellen Sendesignals, das die M Konstellationspunkte hat, um darauf eine erwartete Verzerrung anzuwenden;

Anwenden, im Sender, auf das verarbeitete potentielle Sendesignal, das M verzerrte Konstellationspunkte hat, einer Verarbeitung, die im Wesentlichen einer Verarbeitung entspricht, die in einem Empfänger des drahtlosen Kommunikationssystemn an dem empfangenen Sendesignal ausgeführt wird, um ein verzerrtes Signal zu erzeugen, das N verzerrte Konstellationspunkte hat.

5. Verfahren nach Anspruch 3 oder 4, bei dem die Verarbeitung des potentiellen Sendesignals, um darauf eine erwartete Verzerrung anzuwenden, das Vergleichen einer Amplitude des potentiellen Sendesignals mit einem vorbestimmten Werft umfasst, und, falls die Amplitude den vorbestimmten Wert überschreitct, das Begrenzen der Amplitude des potentiellen Sendesignals auf den vorbestimmten Wert und das Einstellen einer Phase des potentiellen Sendesignals in Abhängigkeit von der ursprünglichen, unbegrenzten Amplitude.

6. Verfahren nach Anspruch 2, 3, 4 oder 5, bei dem der verzerrte Konstellationspunkt unter Berücksichtigung der erwarteten Verzerrung des Sendesignals in dem Sender vor dem drahtlosen Senden bestimmt wird.

7. Verfahren nach einem vorhergehenden Anspruch, bei dem wenigstens ein bestimmter Konstellationspunkt ein idealer Konstellationspunkt ist, wobei angenommen wird, dass es keine Verzerrung des Sendesignals gibt.

8. Verfahren nach einem vorhergehenden Anspruch, bei dem die Metrik abhängt von den jeweiligen Distanzen zwischen dem bestimmten Konstellationspunkt und einer Vielzahl von anderen verfügbaren Konstellationspunkten, die mit dem bestimmten Konstellationspunkt benachbart sind.

9. Verfahren nach einem vorhergehenden Anspruch, bei dem die Metrik abhängt von den jeweiligen Distanzen zwischen dem bestimmten Konstellationspunkt und allen anderen verfügbaren Konstellationspunkten in dem betreffenden besonderen Modulationsschema.

10. Verfahren nach einem vorhergehenden Anspruch, ferner mit dem Beurteilen, ob erwartet wird, dass der Sender das Sendesignal vor dem drahtlosen Senden signifikant verzerren wird, und, falls nicht, dem Modifizieren der Basis, auf der das verfügbare Modulationsschema bei dem Selektionsschritt selektiert wird.

11. Verfahren nach Anspruch 10, bei dem die Beurteilung das Erzeugen eines potentiellen Sendesignals für wenigstens ein genanntes verfügbares Modulationsschema und das Schätzen einer erwarteten Verzerrung jenes potentiellen Sendesignals in dem Sender einschließt.

12. Verfahren nach Anspruch 10 oder 3.1, in Verbindung mit Anspruch 1, bei dem dann, falls die Beurteilung ergibt, dass keine signifikante Verzerrung durch den Sender erwartet wird, das Modulationsschema bei dem Selektionsschritt ohne Berücksichtigung des zweiten Distanzmaßes selektiert wird.

13. Verfahren nach einem vorhergehenden Anspruch, ferner mit dem Beurteilen, ob erwartet wird, dass ein Schwundverlust in einem drahtlosen Kanal von dem Sender zu einem Empfänger des drahtlosen Kommunikationssystems signifikantsein wird, und, falls das so ist, dem Modifizieren der Basis, auf der das Modulationsschema bei dem Selektionsschritt selektiert wird.

14. Verfahren nach Anspruch 13, ferner mit dem Schätzen des Schwundverlustes in dem Empfänger und Zuführen von Informationen bezüglich des geschätzten Schwundverlustes von dem Empfänger zu dem Sender und dem Modifizieren der Basis, auf der das Modulationsschema bei dem Selektionsschritt selektiert wird, in Abhängigkeit von den zugeführten Informationen.

15. Verfahren nach einem vorhergehenden Anspruch, bei dem wenigstens zwei solche Metriken erzeugt werden, wobei jede auf dem bestimmten Konstellationspunkt oder den bestimmten Konstellationspunkten basiert, jedoch in einer Weise berechnet wird, die sich von der jeweils anderen Metrik unterscheidet, und das Verfahren ferner das Umschalten umfasst zwischen einem ersten Selektionsmodus, in dem die Selektion des Modulationsschemas auf einer ersten, oder auf einer ersten Kombination, der Metriken basiert, und einem zweiten Selektionsmodus, in dem die Selektion des Modulationsschemas auf einer zweiten der Metriken basiert, die sich von der genannten ersten Metrik unterscheidet, oder auf einer zweiten Kombination der Metriken, die sich von der genannten ersten Kombination unterscheidet.

16. Verfahren nach einem vorhergehenden Anspruch, bei dem wenigstens eine genannte Metrik für jedes genannte verfügbare Modulationsschema auch von einem erwarteten Energieverlust in dem Sender abhängt, falls das betreffende verfügbare Modulationsschema auf das Sendesignal angewendet wird, wenn die N Zeichen gesendet werden.

17. Sender zur Verwendung in einem drahtlosen Einzelträger-Frequenzteilungskommunikationssystem, welcher Sender umtasst:

ein Empfangsmittel, zum Empfangen von N Zeichen, die unter Verwendung eines Sendesignals zu senden sind, wobei N eine natürliche Zahl größer gleich 1 ist;
ein Konstellationspunktbestimmungsmittel, zum Bestimmen, für jedes von einer Vielzahl von verfügbaren Modulationsschemata, eines Konstellationspunktes des oder jedes genannten Zeichens, falls das betreffende Modulationsschema angewendet wird, um das Zeichen zu senden;
ein Maßerzeugungsmittel, zum Erzeugen, für jedes von der Vielzahl von verfügbaren Modulationsschemata, wenigstens eines Maßes einer erwarteten Sendeleistung, falls das verfügbare Modulationsschema auf das Sendesignal angewendet wird, wenn die N Zeichen gesendet werden, wobei das oder jedes genannte Maß auf dem bestimmten Konstellationspunkt oder den bestimmten Konstellationspunkten basiert;
ein Selektionsmittel, zum Selektieren eines der verfügbaren Modulationsschemata auf der Basis, des wenigstens einen Maßes; und
ein Sendemittel, zum Senden der N Zeichen unter Verwendung des Sendesignals, während das selektierte Modulationschema darauf angewendet wird, bei dem
das Konstellationspunktbestimmungsmittel ferner dafür ausgelegt ist, um für das oder jedes genannte Zeichen einen idealen Konstellationspunkt und einen verzerrten Konstellationspunkt zu bestimmen, bei dem der verzerrte Konstellationspunkt unter Verwendung eines Verstärkerverhaltensmodells bestimmt wird, und bei dem
das wenigstens eine Maß für ein besonderes verfügbares Modulationsschema, das durch das Maßerzeugungsmittel erzeugt wird, eine Metrik ist, die durch eine erste Metrik oder eine Kombination einer ersten und einer zweiten Metrik erhalten wird, und bei dem
das Maßerzeugungsmittel ferner dafür ausgelegt ist, um die ersten und zweiten Metriken für ein besonderes verfügbares Modulationeschema zu erzeugen, wobei die erste Metrik abhängt von einer Distanz zwischen dem bestimmten idealen Konstellationspunkt des oder jedes genannten Zeichens in dem betreffenden besonderen Modulationsschema und wenigstens einem anderen Konstellationspunkt, der in dem betreffenden besonderen Modulationsschema verfügbar ist, und die zweite Metrik abhängt von einer Distanz zwischen dem bestimmten verzerrten Konstellationspunkt des oder jedes genannten Zeichens in dem betreffenden besonderen Modulationsschema und wenigstens einem anderen verfügbaren Konstellationspunkt.

18. Nutzergerät zur Verwendung in einem drahtlosen Einzelträger-Frequenzteilungskommunikationssystem, das einen Sender nach Anspruch 17 umfasst, wobei das Sendesignal ein Uplink-Signal ist, das durch das Nutzergerät an eine Basisstation des Systems gesendet wird.

19. Drahtloses Einzeltrager-Frequenzteilungskommunikationssystem, das einen Sender nach Anspruch 17 und wenigstens einen Empfänger umfasst, der dafür ausgelegt ist, um das Sendesignal zu empfangen.

20. Betriebsprogramm, das dann, wenn es durch einen Prozessor in einem Sender eines drahtlosen Einzelträger-Frequenzteilungskommunikationssystems ausgeführt wird, bewirkt, dass der Sender:

N Zeichen empfängt, die unter Verwendung eines Sendesignals zu senden sind, wobei N eine natürliche Zahl größer gleich 1 ist, und für jedes von einer Vielzahl von verfügbaren Modulationsschemata einen Konstellationspunkt des oder jedes genannten Zeichens bestimmt, falls das betreffende Modulationsschema angewendet wird, um das Zeichen zu senden;
für jedes von der Vielzahl von verfügbaren Modulationsschemata wenigstens ein Maß einer erwarteten Sendeleistung erzeugt, auf der Basis des bestimmten Konstellationspunktes oder der bestimmten Konstellationspunkte, falls das verfügbare Modulationsschema auf das Sendesignal angewendet wird, wenn die N Zeichen gesendet werden;

eines der verfügbaren Modulationsschemata auf der Basis des wenigstens einen Maßes selektiert; und

die N Zeichen unter Verwendung des Sendesignals sendet, während das selektierte Modulationsschema darauf angewendet wird, bei dem

das wenigstens eine Maß für ein besonderes verfügbares Modulationsschema eine Metrik ist, die durch eine erste Metrik oder eine Kombination einer ersten und einer zweiten Metrik erhalten wird, und bei dem

für das oder jedes genannte Zeichen ein idealer Konstellationspunkt und ein verzerrter Konstellationspunkt bestimmt werden, bei dem der verzerrte Konstellationspunkt unter Verwendung eines Verstärkerverhaltensmadells bestimmt wird, und die ersten und zweiten Metriken für ein besonderes verfügbares Modulationsschema erzeugt werden, wobei die erste Metrik abhängt von einer Distanz zwischen dem bestimmten idealen Konstellationspunkt des oder jedes genannten Zeichens in dem betreffenden besonderen Modulationsschema und wenigstens einem anderen Konstellationspunkt, der in dem betreffenden besonderen Modulationsschema verfügbar ist, und die zweite Metrik abhängt von einer Distanz zwischen dem bestimmten verzerrten Konstellationspunkt des oder jedes genannten Zeichens in dem betreffenden besonderen Modulationsschema und wenigstens einem anderen verfügbaren Konstellationspunkt.

## Revendications

1. Procédé d'adaptation d'un schéma de modulation appliqué par un émetteur à une signal de transmission dans un système de communication sans fil par répartition en fréquence à porteuse unique, le procédé comprenant :

   la réception au niveau ce l'émetteur de N symboles devant être transmis en utilisant ledit signal de transmission, où N est un nombre naturel supérieur ou égal à 1, est, pour chacun d'une pluralité de schémas de modulation disponibles, la détermination, d'un point de constellation du ou de chaque dit symbole si le schéma de modulation concerné est appliqué pour transmettre le symbole ;

   pour chacun de ladite pluralité de schémas de modulation disponibles, la production, sur la base du ou des points de constellation déterminés, d'au moins une mesure d'une performance de transmission escomptée si le schéma de modulation disponible est appliqué au signal de transmission lors de à transmission desdits N symboles ;

   la sélection d'un des schémas de modulation disponibles sur la base de la ou d'au moins une dite mesure ; et

   la transmission des N symboles en utilisant ladit signal de transmission tout en y appliquant le schéma de modulation sélectionné, où

   la ou au moins ladite mesure pour un schéma de modulation particulier disponible est une métrique obtenue par une première métrique ou une combinaison d'une première et d'une seconde métrique, et où le procédé comprend en outre :

   la détermination pour le ou chaque dit symbole d'un point de constellation idéal et d'un point de constellation distordu, où le point de constellation distordu est détermine en utilisant un modèle de comportement d'amplificateur, et la production desdites première est seconde métriques pour un schéma de modulation particulier disponible, la première métrique dépendant d'une distance entre le point de constellation idéal, détermine du ou de chaque dit symbole dans le schéma de modulation particulier concerné et au moins un autre point de constellation disponible dans le schéma de modulation particulier concerné, et la seconde métrique dépendant d'une distance entre le point de constellation distordu déterminé du ou de chaque dit symbole dans le schéma de modulation particulier concerné et au moins un autre point de constellation disponible.

2. Procédé selon la revendication 1, dans lequel au moins un point de constellation déterminé est un point de constellation, distordu reflétant une distorsion escomptée du signal de transmission.

3. Procédé selon la revendication 2, dans lequel la détermination du ou des points de constellation distordus pour chaque dit schéma de modulation disponible comprend :

   la génération d'un signal de transmission potentiel pour le schéma de modulation concerné ;

   le traitement du signal de transmission potentiel pour y appliquer une distorsion escomptée ; et

   la détermination du(des) point (s) de constellation distordu (s) sur la base du signal de transmission potentiel traité ayant ladite distorsion.

**4.** Procédé selon la revendication 2, dans lequel l'émetteur génère le signal de transmission en utilisant un traitement DFT à N point et un traitement IFFT à M point, où M est différent de N, de sorte que le signal de transmission basé sur les N symboles reçus ait M points de constellation, et la détermination du ou des points de constellation distordus pour chaque dit schéma de modulation disponible comprend :

la génération d'un signal de transmission potentiel pour le schéma de modulation concerné ayant M points de constellation ;
le traitement, du signal de transmission potentiel ayant lesdits M points de constellation pour y appliquer une distorsion escomptée ;
dans l'émetteur, l'application au signal de transmission potentiel traité ayant M points de constellation distordus d'un traitement se conformant sensiblement au traitement effectué dans un récepteur du système de communication sans fil sur le signal de transmission reçu afin de générer un signal distordu ayant. N points de constellation distordus.

**5.** Procédé selon la revendication 3 ou 4, dans lequel ledit traitement du signal de transmission potentiel pour appliquer une distorsion escomptée comprend la comparaison d'une amplitude du signal de transmission potentiel avec une valeur prédéterminée et, si l'amplitude dépasse la valeur prédéterminée, limiter l'amplitude du signal de transmission potentiel à ladite valeur prédéterminée et ajuster une phase du signal de transmission potentiel en fonction de l'amplitude illimitée d'origine.

**6.** Procédé selon la revendication 2, 3, 4 ou 5, dans lequel ledit point de constellation distordu est déterminé en tenant compte de la distorsion escomptée du signal de transmission dans l'émetteur avant la transmission sans fil.

**7.** Procédé selon l'une quelconque des revendications précédentes, dans lequel au moins un point de constellation déterminé est un point de constellation idéal en supposant qu'il n'y ait pas de distorsion du signal de transmission.

**8.** Procédé selon l'une quelconque des revendications précédentes, dans lequel ladite métrique dépend des distances respectives entre ledit point de constellation déterminé et une pluralité d'autres points de constellation disponibles avoisinant le point de constellation déterminé.

**9.** Procédé selon l'une quelconque des revendications précédentes, dans lequel ladite métrique dépend des distances respective entre ledit point de constellation déterminé et tous les autres points de constellation disponibles dans le schéma de modulation particulier concerné.

**10.** Procédé selon l'une quelconque des revendications précédentes, comprenant en outre le fait de juger s'il est escompté que l'émetteur distordra le signal de transmission de manière significative avant la transmission sans fil et, si non, modifier la base sur laquelle le schéma de modulation disponible est sélectionné à l'étape de sélection.

**11.** Procédé selon la revendication 10, dans lequel le jugement implique la génération d'un signal de transmission potentiel pour au moins un dit schéma de modulation disponible, et l'estimation d'une distorsion escomptée de ce signal de transmission potentiel dans l'émetteur.

**12.** Procédé selon la revendication 10 ou 11 lorsque lues comme annexées à la revendication 1, dans lequel si le jugement est qu'aucune distorsion significative par l'émetteur n'est escomptée, le schéma de modulation est sélectionné à l'étape de sélection sans prendre en compte la seconde mesure de distance.

**13.** Procédé selon l'une quelconque des revendications précédentes, comprenant en outre le fait de juger s'il est escompté qu'un affaiblissement d'évanouissement dans un canal sans fil de l'émetteur à un récepteur dudit système de communication sans fil sera significatif et, si oui, modifier la base sur laquelle le schéma de modulation est sélectionné à l'étape de sélection.

**14.** Procédé selon la revendication 13, comprenant en outre l'estimation de l'affaiblissement d'évanouissement dans le récepteur et la fourniture du récepteur à l'émetteur d'informations relatives à l'affaiblissement d'évanouissement estimé et la modification de la base sur laquelle le schéma de modulation est sélectionné à l'étape de sélection en fonction des informations fournies.

**15.** Procédé selon l'une quelconque des revendications précédentes, dans lequel au moins deux telles métriques sont produites, chacune basée sur le ou les points de constellation déterminés mais calculée d'une façon différente de ladite autre métrique, et le procédé comprend en outre la commutation entre un premier mode de sélection, dans lequel la sélection du schéma de modulation est basée sur une première, ou une première combinaison, desdites métriques, et un second mode de sélection dans lequel la sélection du schéma de modulation est basée sur une seconde des métriques, différente de ladite première métrique, ou sur une seconde combinaison des métriques différente de ladite première combinaison.

16. Procédé selon l'une quelconque des revendications précédentes, dans lequel au moins une dite métrique pour chaque dit schéma de modulation disponible dépend également d'un affaiblissement en puissance escompté dans l'émetteur si le schéma de modulation disponible concerné est appliqué au signal de transmission lors de la transmission desdits N symboles.

17. Emetteur destiné à être utilisé dans un système de communication sans fil par répartition en fréquence à porteuse unique, l'émetteur comprenant :

   un moyen de réception pour recevoir N symboles devant être transmis en utilisant un signal de transmission, où N est un nombre naturel supérieur ou égal à 1 ;
   un moyen de détermination de point de constellation pour déterminer, pour chacun d'une pluralité de schémas de modulation disponibles, un point de constellation du ou de chaque dit symbole si le schéma de modulation concerné est appliqué pour transmettre le symbole ;
   un moyen de production de mesure pour produire, pour chacun de ladite pluralité de schémas de modulation disponibles, au moins une mesure d'une performance de transmission escomptée si le schéma de modulation disponible est appliqué au signal de transmission lors de la transmission desdits N symboles, la ou chaque dite mesure étant basée sur le ou les points de constellation déterminés ;
   un moyen de sélection pour sélectionner un des schémas de modulation disponibles sur la base de la ou d'au moins une dite mesure ; et
   un moyen de transmission pour transmettre les N symboles en utilisant ledit signal de transmission tout en y appliquant le schéma de modulation sélectionné, où
   le moyen de détermination de point de constellation est en outre adapté pour déterminer pour le ou chaque dit symbole un point de constellation idéal et un point de constellation distordu, où le point de constellation distordu est déterminé en utilisant un modèle de comportement d'amplificateur, et où
   la au moins une mesure pour un schéma de modulation particulier disponible, produit par ledit moyen de production de mesure, est une métrique obtenue par une première métrique ou une combinaison d'une première et d'une seconde métrique, et où
   le moyen de production de mesure est en outre adapté pour produire lesdites première et seconde métriques pour une schéma de modulation particulier disponible, la première métrique dépendant d'une distance entre le point de constellation idéal déterminé du ou de chaque dit symbole dans le schéma de modulation particulier concerné et au moins un autre point de constellation disponible dans le schéma de modulation particulier concerné, et la seconde métrique dépendant d'une distance entre le point de constellation distordu déterminé du ou de chaque dit symbole dans le schéma de modulation particulier concerné et au moins un autre point de constellation disponible.

18. Equipement utilisateur, destiné à être utilisé dans un système de communication sans fil par répartition en fréquence à porteuse unique, comprenant un émetteur selon la revendication 17, ledit signal de transmission étant un signal de liaison montante transmis par l'équipement utilisateur à une station de base du système.

19. Système de communication sans fil par répartition en fréquence à porteuse unique comprenant un émetteur selon la revendication 17 et au moins un récepteur adapté pour recevoir le signal de transmission.

20. Programme d'exploitation qui, lorsqu'il est exécuté par un processeur dans un émetteur d'un système de communication sans fil par répartition en fréquence à porteuse unique, amène l'émetteur à :

   recevoir N symboles devant être transmis en utilisant un signal de transmission, où N est un nombre naturel supérieur ou égal à 1, et, pour chacun d'une pluralité de schémas de modulation disponibles, déterminer un point de constellation du ou de chaque dit symbole si le schéma de modulation concerné est appliqué pour transmettre le symbole ;
   produire, pour chacun de ladite pluralité de schémas de modulation disponibles, sur la base du ou des points de constellation déterminés, au moins une mesure d'une performance de transmission escomptée si le schéma de modulation disponible est appliqué au signal de transmission lors de la transmission desdits N symboles ;

sélectionner un des schémas de modulation disponibles sur la base de la ou d'au moins une dite mesure ; et transmettre les N symboles en utilisant ledit signal de transmission tout en y appliquant le schéma de modulation sélectionné, où

la au moins une dite mesure pour un schéma de modulation particulier disponible est une métrique obtenue par une première métrique ou une combinaison d'une première et d'une seconde métrique, et où,

pour le ou chaque dit symbole, un point de constellation idéal et un point de constellation distordu sont déterminés, où le point de constellation distordu est déterminé en utilisant un modèle de comportement d'amplificateur, et produire lesdites première et seconde métriques pour un schéma de modulation particulier disponible, la première métrique dépendant d'une distance entre le point de constellation idéal déterminé du ou de chaque dit symbole dans le schéma de modulation particulier concerné et au moins un autre point de constellation disponible dans le schéma de modulation particulier concerné, et la seconde métrique dépendant d'une distance entre le point de constellation distordu déterminé du ou de chaque dit symbole dans le schéma de modulation particulier concerné et au moins un autre point de constellation disponible.

Coded symbol rate=R

$N_{TX}$ symbols

DFT

Sub-carrier Mapping

IFFT

CP insertion

Size-$N_{TX}$

Size-$N_{FFT}$

*Fig.1*

Fig.2A

Fig.2B

START

RECEIVE N
SYMBOLS — S1

FOR EACH AVAILABLE
MODULATION SCHEME
DETERMINE A
CONSTELLATION POINT
FOR EACH SYMBOL — S2

FOR EACH AVAILABLE
MODULATION SCHEME
PRODUCE AT LEAST
ONE MEASURE OF
EXPECTED TRANSMISSION
PERFORMANCE BASED
ON THE DETERMINED
CONSTELLATION POINTS — S3

SELECT ONE
MODULATION SCHEME
BASED ON THE
MEASURE(S) — S4

TRANSMIT THE N
SYMBOLS USING THE
SELECTED MODULATION
SCHEME — S5

MORE
SYMBOLS TO
TRANSMIT
? — S6

END

Fig.3

*Fig.4*

$$\hat{c}_{21}$$
$$a_1$$
$$a_2$$

$$\hat{c}_{2N}$$
$$a_1$$
$$a_2$$

22

AMPLIFIER BEHAVIOUR MODEL

$$c_{21}$$
$$a_1$$
$$a_2$$

$$c_{2N}$$
$$a_1$$
$$a_2$$

Symbol 1 • • • • • Symbol N

Data Frame i

*Fig.5*

*Fig.6*

*Fig.7*

*Fig.8*

Fig.9

Fig.10

Fig.11

Clipping Level = 1.0 dB
Fading Variance = 0.05

Fig.13

EP 1 903 737 B1

*Fig.12A*

*Fig.12B*

Fig.14

Fig.15

Fig.16

Fig.17

Fig.18

Fig.19

Fig.20

Fig.21

Fig.22

Fig.23

Fig.24

Fading Channel,TU30Kmph

16QAM 1/3 rate coding

Clipping Level 1 dB

(a),(b)

(d)

(c)

BLER

0.1

0.1e-1

0.1e-2

---✳--- (d)
---□--- (b)
---◇--- (c)
---⊖--- (a)

9    10    11    12    13    14    15

Eb / No per Rx branch (dB)

*Fig.25*

Fading Channel,TU30Kmph

16QAM 1/3 rate coding

Clipping Level 1 dB

(d)

(c)

(a)

(b)

BER

0.1e-1

0.1e-2

0.1e-3

---✳--- (d)
---□--- (b)
---◇--- (c)
---⊖--- (a)

9    10    11    12    13    14    15

Eb / No per Rx branch (dB)

*Fig.26*

*Fig.27*

*Fig.28*

Fig.29

Fig.30

44

Fig.31

Fig.32

Fig.33

Fig.34

Distribution of 16QAM Schemes (10 dB)

Fig.35

**EP 1 903 737 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6748021 B

- US 2002193078 A